# EUROPEAN PATENT APPLICATION

(11) **EP 4 801 183 A1**
(43) Date of publication of application: **02.09.2026**
(21) Application number: 24933321.2
(22) Date of filing: 02.04.2024
(51) Int. Cl.: H04W 74/0833

(54) **RANDOM ACCESS METHOD AND APPARATUS, BASE STATION, USER TERMINAL, AND STORAGE MEDIUM**

(71) Applicant: New H3C Technologies Co., Ltd., Hangzhou, Zhejiang 310052 (CN)
(72) Inventor: ZHOU, Lei, Beijing 100102 (CN); KONG, Lei, Beijing 100102 (CN); ZHANG, Jun, Beijing 100102 (CN)
(74) Representative: Zimmermann & Partner Patentanwälte mbB
(86) International application number: PCT/CN2024/085652
(87) International publication number: WO 2025/208362

(57) **Abstract**

A random access method and apparatus, a base station, a user terminal, and a storage medium, relating to the technical field of communications. The method comprises: a first user terminal generates a random access message, a frame structure configured on the first user terminal indicating that there is a first subframe comprising an uplink frequency domain sub-band; and, on the basis of a PRACH resource configured on the first sub-frame and/or a second sub-frame, the first user terminal sends the random access message to a base station, the second sub-frame being a sub-frame of uplink transmission data. The base station allows the first user terminal to randomly access said base station. By applying the technical solution provided by embodiments of the present application, the energy consumption of a system can be reduced, an access delay can be reduced, the performance requirements of service continuity can be met, and user experience can be improved.

## Description

### TECHNICAL FIELD

The present disclosure relates to the field of communication technology, and in particular to a random access method, a random access apparatus, a base station, a user equipment and a storage medium.

### BACKGROUND

In a 5G New Radio (NR) network, a user equipment (UE) accesses a base station through a random access (RA) process, thereby enabling the UE to access the network. A random access channel occasion (RO) time-frequency resource and a preamble resource are configured on an uplink time slot, that is, the UE triggers the RA process through a physical random access channel (PRACH) resource configured on the uplink time slot.

However, with the development of communication technology, the number of UEs used in the cell is constantly increasing, and PRACH resources of a large number of UEs are configured on the uplink time slot, which will lead to an increase in access latency, and cannot meet performance requirements for service continuity, resulting in poor user experience.

### SUMMARY

The objects of examples of the present disclosure is to provide a random access method, a random access apparatus, a base station, a user equipment and a storage medium, to reduce energy consumption of printing and dyeing a fabrics, reduce access latency, meet the performance requirements for service continuity, and improve user experience. The specific technical solutions are as follows:
In a first aspect, an example of the present disclosure provides a random access method, which is applied to a first user equipment, the first user equipment is capable of identifying an uplink frequency domain sub-band on a first time granularity, wherein the method includes:
generating a random access message;
sending the random access message to a base station based on a PRACH resource configured on the first time granularity and/or a second time granularity, wherein the second time granularity is a time granularity of uplink transmission data.

In a second aspect, an example of the present disclosure provides a random access method, which is applied to a base station, wherein the method includes:
receiving a random access message sent by a first user equipment based on a physical random access channel PRACH resource configured on a first time granularity and/or a second time granularity, wherein the first user equipment is capable of identifying an uplink frequency domain sub-band on a first time granularity, and the second time granularity is a time granularity of uplink transmission data;
randomly accessing the first user equipment to the base station based on the random access message.

In a third aspect, an example of the present disclosure provide a random access apparatus, which is applied to a first user equipment, wherein the first user equipment is capable of identifying an uplink frequency domain sub-band on a first time granularity, wherein the apparatus includes:
a generation module, to generate a random access message;
a sending module, to send the random access message to the base station based on a physical random access channel PRACH resource configured on the first time granularity and/or a second time granularity, wherein the second time granularity is a time granularity of uplink transmission data.

In a fourth aspect, an example of the present disclosure provides a random access apparatus, which is applied to a base station, wherein the apparatus includes:
a receiving module, to receive a random access message sent by a first user equipment based on a physical random access channel PRACH resource configured on a first time granularity and/or a second time granularity, wherein the first user equipment is capable of identifying an uplink frequency domain sub-band on the first time granularity, and the second time granularity is a time granularity of uplink transmission data;
an access module, to randomly access the first user equipment to the base station based on the random access message.

In a fifth aspect, an example of the present disclosure provides a user equipment, which includes a processor and a machine-readable storage medium, the machine-readable storage medium stores machine-executable instructions that can be executed by the processor to cause the processor to carry out any of the methods provided in the first aspect.

In a sixth aspect, an example of the present disclosure provides a base station, which includes a processor and a machine-readable storage medium, the machine-readable storage medium stores machine-executable instructions that can be executed by the processor to cause the processor to carry out any of the methods provided in the second aspect.

In a seventh aspect, an example of the present disclosure provides a computer-readable storage medium, which stores a computer program thereon, when the computer program is executed by a processor, which causes the processor to carry out any one of the methods provided in the first aspect.

In an eighth aspect, an example of the present disclosure provides a computer-readable storage medium, which stores a computer program thereon, when the computer program is executed by a processor, which causes the processor to carry out any one of the methods provided in the second aspect.

In a ninth aspect, an example of the present disclosure provides a computer program product that, which when running on a computer, causes the computer to carry out any of the methods provided in the first aspect.

In a tenth aspect, an example of the present disclosure provides a computer program product that, which when running on a computer, causes the computer to carry out any of the methods provided in the second aspect.

In the technical solutions provided by the examples of the present disclosure, the user equipment is capable of identifying the uplink frequency domain sub-band on the first time granularity, that is, the uplink time-frequency resource known to the user equipment further includes the uplink frequency domain sub-band configured in the first sub-frame (including down link time granularity and flexible time granularity), in addition to the second time granularity (i.e., the uplink time granularity). Based on this, the user equipment can comprehensively utilize the PRACH resource configured on the first sub-frame and the second frequency domain sub-band to send a random access message to the base station, so as to complete the random access. In this random access process, the uplink time-frequency resource configured for the PRACH resource is increased, which greatly reduces the access latency when a large number of UEs access the network, avoids the problem of service interruption caused by excessive access latency, and meets the performance requirements for service continuity and improves user experience.

Of course, it is not necessary for any product implementing the present disclosure to achieve all the advantages described above simultaneously.

### BRIEF DESCRIPTION OF THE DRAWINGS

The accompanying drawings described here are used to provide a further understanding of the present disclosure and constitute a part of the same. The illustrative examples of the present disclosure and their descriptions are used to explain the present disclosure and do not constitute an improper limitation of the present disclosure.
Figure 1 is a schematic diagram of a half duplex mode in the prior art;
Figure 2 is a schematic diagram of a full duplex mode in the prior art;
Figure 3a is a schematic diagram of a competition-based RA in the prior art;
Figure 3b is a schematic diagram of a non-competition-based RA in the prior art;
Figure 4 is a first schematic flow of a random access method provided by an example of the present disclosure;
Figure 5 is a schematic diagram of a frame structure provided by an example of the present disclosure;
Figure 6 is a second schematic flow of a random access method provided by an example of the present disclosure;
Figures 7a to 7g are schematic diagrams of configuring PRACH resources on the frame structure shown in Figure 5 provided by examples of the present disclosure;
Figure 8a is a schematic diagram of a first part of a frequency domain starting point when configuring a PRACH resource on the frame structure provided by an example of the present disclosure;
Figure 8b is a schematic diagram of a second part of a frequency domain starting point when configuring a PRACH resource on the frame structure provided by an example of the present disclosure;
Figure 9 is a third schematic flow of a random access method provided by an example of the present disclosure;
Figure 10 is a fourth schematic flow of a random access method provided by an example of the present disclosure;
Figure 11 is a first structural schematic diagram of a random access apparatus provided by an example of the present disclosure;
Figure 12 is a second structural schematic diagram of a random access apparatus provided by an example of the present disclosure;
Figure 13 is a third structural schematic diagram of a random access apparatus provided by an example of the present disclosure;
Figure 14 is a fourth structural schematic diagram of a random access apparatus provided by an example of the present disclosure;
Figure 15 is a schematic structural diagram of a user equipment provided by an example of the present disclosure;
Figure 16 is a schematic structural diagram of a base station provided by an example of the present disclosure.

### DETAILED DESCRIPTION

In order to make the objective, technical solutions and advantages of the present disclosure clearer and more understandable, the present disclosure will be described in more detail below with reference to the accompanying drawings and examples. Obviously, the described examples are only some, and not all, of the examples of the present disclosure. All other examples obtained based on the examples of the present disclosure by those skilled in the art fall into the scope of protection of the present disclosure.

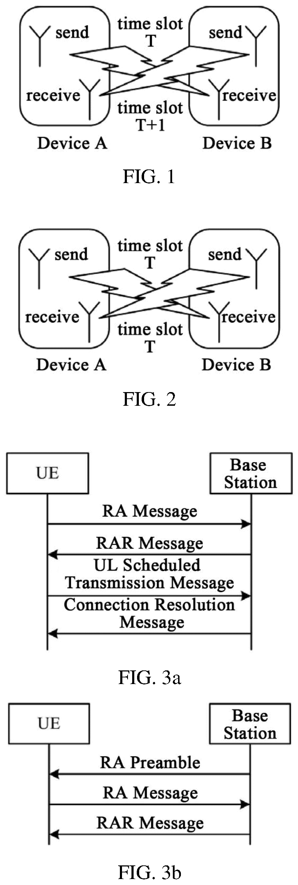

A traditional time division duplex (TDD) communication system works in a half duplex (HD) mode. In the HD mode, a frame structure is strictly divided into an uplink (UL) time slot, a down link (DL) time slot and a special (S) time slot, wherein the S time slot can be used as a UL time slot, a DL time slot or a guard period (GP). In the HD mode, a communication device only transmits data uplink, or only transmits data down link in a time slot. As shown in Figure 1, a device A and a device B communicate with each other. In a time slot T, the device B only receives data sent by the device A. In a time slot T+1, the device B only sends data to the device A.

In the current 5G commercial network, in order to improve throughput of the network, more DL time slots are configured, which results in fewer UL time slots, limited uplink transmission rate, and increased uplink transmission latency, which is not beneficial for achieving an ultra-reliability low latency communication (URLLC) service such as automatic control, control-to-control, and the like.

In a full duplex (FD) mode, a communication device can transmit data uplink and transmit data down link simultaneously. As shown in Figure 2, a device A and a device B communicate with each other. In a time slot T, the device B receives data sent by device A, and in the time slot T, the device B also sends data to the device A. The FD mode is a feasible technical solution to solve the above problems.

In the 5G NR network, a UE accesses a base station through a RA process, thereby enabling the UE to access the network. Configuring a PRACH resource on an uplink time slot, that is, the UE triggers a competition-based RA process or a non-competition-based RA process through the PRACH resource configured on the uplink time slot. A RO time-frequency resource contained in the PRACH resource is a time-frequency resource that triggers the RA process.

The competition-based RA can further be referred to as a 4-block random access channel (RACH), the RA process is shown in Figure 3a, a first message (Msg1) and a second message (Msg2), a third message (Msg3) and a fourth message (Msg4) are exchanged between a UE and a base station, that is, a random access request (RA) message, a random access response (RAR) message, a UL scheduled transmission message and a connection resolution message, a UE random access to the base station is completed through Msg1~Msg4.

A non-competition-based RA can further be referred to as a 3-block RACH, the RA process is shown in Figure 3b, including the following blocks:
the base station allocates a RA preamble to the UE, and exchanges the first message (Msg1) and the second message (Msg2) with the UE, i.e., the RA message and the RAR message, and completes the UE random access to the base station through the Msg1~Msg2.

PRACH resources in the above RA process are each configured on the uplink time slot. However, with the development of communication technology, the number of the UEs used in the cell is constantly increasing, and PRACH resources of a large number of UEs are configured on the uplink time slot, which will lead to an increase in access latency, and cannot meet performance requirements for service continuity, resulting in poor user experience.

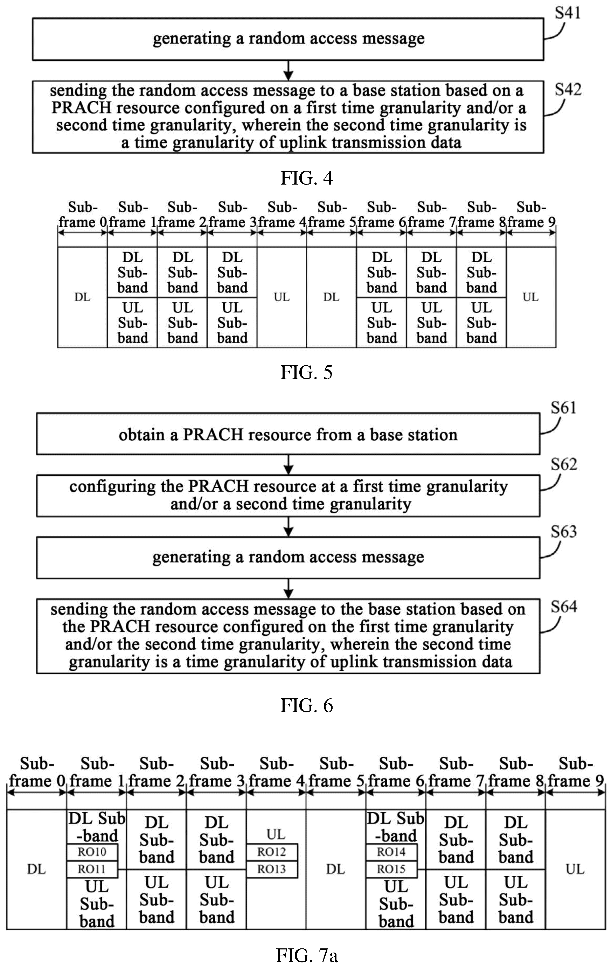

In order to solve the above problems, an example of the present disclosure provides a random access method, as shown in Figure 4, which is applied to a first UE, the first UE is capable of identifying an uplink frequency domain sub-band on a first time granularity. The time granularity may be a sub-frame, a time slot or a symbol, which is not limited. In the examples of the present disclosure, the base station may deliver a frame structure configuration to the first UE and other UEs (such as a second UE below) in a broadcast, unicast or multicast manner. The frame structure configuration indicates that there is a first time granularity including an uplink(UL) frequency domain sub-band, that is, the first UE knows a time-frequency resource of the sub-band full duplex (SBFD) time granularity. The SBFD time granularity (such as the first time granularity) is a time granularity including at least one UL frequency domain sub-band and at least one down link (DL) frequency domain sub-band in the frequency domain. Taking the time granularity as a sub-frame as an example, a frame structure shown in Figure 5 includes 10 sub-frames, i.e., sub-frame 0 to sub-frame 9 respectively, wherein the sub-frame 1 to sub-frame 3 and the sub-frame 6 to sub-frame 8 include one uplink frequency domain sub-band and one down link frequency domain sub-band respectively, that is, the sub-frame 1 to sub-frame 3 and the sub-frame 6 to sub-frame 8 are SBFD sub-frames. The uplink frequency domain sub-band includes an uplink time-frequency resource for uplink data transmission; the down link frequency domain sub-band includes a down link time-frequency resource for down link data transmission. In Figure 5, only one SBFD sub-frame including one uplink frequency domain sub-band and one down link frequency domain sub-band is used as an example for illustration, and which is not intended to be limited.

The random access method shown in Figure 4 includes the following blocks.
Block S41, generating a random access message;
Block S42, sending the random access message to a base station based on a PRACH resource configured on a first time granularity and/or a second time granularity, wherein the second time granularity is a time granularity of uplink transmission data.

In the technical solution provided by the example of the present disclosure, the user equipment is capable of identifying the uplink frequency domain sub-band on the first time granularity, that is, the uplink time-frequency resource known to the user equipment further includes the uplink frequency domain sub-band configured in the first sub-frame (including down link time granularity and flexible time granularity), in addition to the second time granularity (i.e., the uplink time granularity). Based on this, the user equipment can comprehensively utilize the PRACH resource configured on the first sub-frame and the second frequency domain sub-band to send a random access message to the base station, so as to complete the random access. In this random access process, the uplink time-frequency resource configured on the PRACH resource is increased, which greatly reduces the access latency when a large number of UEs access the network, avoids the problem of service interruption caused by excessive access latency, and meets the performance requirements for service continuity and improves user experience.

For ease of explanation, a time granularity being a sub-frame is used as an example below, which does not serve a limiting purpose.

In the above-mentioned block S41, the random access message may be the first message in the above-mentioned Figure 3a and Figure 3b, that is, the RA message. When executing the random access process, the UE generates a random access message.

In the above block S42, the uplink(UL) sub-frame (such as the second sub-frame) is an HD sub-frame, that is, the UL sub-frame is only used for uplink transmission of data, such as the sub-frame 4 and sub-frame 9 as shown in Figure 5. One frame structure may further include a down link sub-frame, the down link (DL) sub-frame is also an HD sub-frame, that is, the DL sub-frame is only used for down link transmission of data, such as the sub-frame 0 and sub-frame 5 as shown in Figure 5.

In this example of the present disclosure, the uplink time-frequency resource further includes an uplink frequency domain sub-band, in addition to the uplink sub-frame. The PRACH resource may be configured on the uplink sub-frame, or configured on the uplink frequency domain sub-band, or configured on the uplink sub-frame and the uplink frequency domain sub-band. Then, the UE uses the PRACH resources configured in a large number of uplink time-frequency resources in the frame structure to send a random access message to the base station, so as to complete the random access. The base station can be a cellular base station, a 4G base station or a 5G base station, or other type of base station, which is not limited.

The communication system includes two types of UEs, the first type of UE (such as the first UE) is capable of identifying the uplink frequency domain sub-band on the first time granularity, that is, it knows the time-frequency resource of the SBFD sub-frame; the second type of UE (such as the second UE) is not capable of identifying the uplink frequency domain sub-band on the first time granularity, that is, it does not know the time-frequency resource of the SBFD sub-frame.

In this example of the present disclosure, the PRACH resource may be pre-configured and configured in the first UE, or may be obtained by the first UE from the base station and configured in the first UE, as shown in Figure 6.
Block S61, obtaining a PRACH resource from the base station;
Block S62, configuring the PRACH resource on the first time granularity and/or the second time granularity.
Block S63, generating a random access message;
Block S64, sending the random access message to the base station based on the PRACH resource configured on the first time granularity and/or the second time granularity, wherein the second time granularity is a time granularity of uplink transmission data. Blocks S63 to S64 are the same as the above blocks S41 to S42.

In the technical solution provided by the example of the present disclosure, before generating the random access message, the first UE obtains a PRACH resource from the base station and configures the PRACH resource on the first time granularity and/or the second time granularity. Based on the PRACH resource configured by the current base station, the accuracy of the random access is ensured, thereby ensuring the access performance of the first UE.

For ease of explanation, a time granularity being a sub-frame is used as an example below, which does not serve a limiting purpose.

In the above block S61, the PRACH resource may only include a PRACH resource corresponding to the second sub-frame (such as the second PRACH resource), or may include a PRACH resource corresponding to the first sub-frame (such as the first PRACH resource) and the second PRACH resource. The first PRACH resource is a PRACH resource configured for the first sub-frame, which can be identified by the first UE, and is configured on the first sub-frame and the second sub-frame; the second PRACH resource is a PRACH resource configured for the second sub-frame, which can be identified by the first UE and the second UE, and is configured on the first sub-frame and the second sub-frame.

The base station can configure the second PRACH resource, and the base station can also configure the first PRACH resource or the base station does not configure the first PRACH resource. The base station sends the configured PRACH resource to the UEs, so that the UEs (which include the first UE and the second UE) obtain the PRACH resource.

In the case that the base station does not configure the first PRACH resource, when the first UE executes the random access, the first UE obtains the PRACH resource from the base station and can only obtain the second PRACH resource.

In the case that the base station configures the first PRACH resource, when the first UE executes the random access, the first UE obtains the PRACH resource from the base station and can obtain the first PRACH resource and the second PRACH resource.

In the example of the present disclosure, a complete PRACH resource should include an RO time-frequency resource and a preamble resource corresponding to the RO time-frequency resource. For example, the first PRACH resource includes a first RO time-frequency resource and a first preamble resource corresponding to the first RO time-frequency resource, the second PRACH resource includes a second RO time-frequency resource and a second preamble resource corresponding to the second RO time-frequency resource.

In some examples, the base station completely configures the first PRACH resource and the second PRACH resource, that is, configures the first RO time-frequency resource and the first preamble resource, as well as the second RO time-frequency resource and the second preamble resource.

In some examples, the base station may omit configuring the first preamble resource. In this case, block S61 carried out by the first UE may be: obtaining the first PRACH resource and the second PRACH resource from the base station, wherein the first PRACH resource includes the first RO time-frequency resource, and the second PRACH resource includes the second RO time-frequency resource and the second preamble resource; taking the second preamble resource as the first preamble resource and adding the same to the first PRACH resource.

In this example of the present disclosure, the first UE and the base station configure the first preamble resource in a default manner, which reduces the network overhead caused by transmitting the first PRACH resource.

In the above S62, the first UE and the base station may agree on the configuration mode of the PRACH resource in advance, or the base station may send a configuration signaling (such as a first configuration signaling) to the first UE, and specify the configuration mode of the PRACH resource through the first configuration signaling. In the case that the first UE determines the configuration mode of the PRACH resource, the first UE configures the obtained PRACH resource on the first sub-frame, on the second sub-frame, or on the first sub-frame and the second sub-frame.

In the following, the configuration and use of the PRACH resource are explained in detail through two cases. In the example of the present disclosure, the transmission of the PRACH resource and the configuration signaling indicating the configuration and use of the PRACH resource can be carried by RRC signaling/ MAC Control Element (MAC-CE)/DCI (Down link Control Indication).

Case 1: configuring the PRACH resource uniformly, that is, the first PRACH resource includes one RO time-frequency resource and one preamble resource (such as the first preamble resource).

In the example of the present disclosure, case 1 can be subdivided into three cases 11 to 13, which are as follows specifically.

Case 11, the first PRACH resource and the second PRACH resource are the same, that is, the first RO time-frequency resource and the second RO time-frequency resource are the same, and the first preamble resource and the second preamble resource are the same.

In the case 11, the base station configures two PRACH resources, and may separately configure the first PRACH resource; the base station may not separately configure the first PRACH resource, that is, the base station continues to use the second PRACH resource.

If the base station separately configures the first PRACH resource, the PRACH resource obtained by the first UE include: (1) the first PRACH resource; (2) the second PRACH resource; (3) the first PRACH resource and the second PRACH resource. In this case, the above block S62 may be: configuring the obtained PRACH resource (which includes the first PRACH resource and the second PRACH resource) on the first sub-frame and the second sub-frame.

In the case 11, the first PRACH resource and the second PRACH resource are the same, while the first PRACH resource and the second PRACH resource may not be distinguished.

If the base station does not separately configure the first PRACH resource, the first UE can only obtain the second PRACH resource. In this case, the above block S62 can be achieved in the following two modes.

Mode a11, configuring the second PRACH resource on the first sub-frame and the second sub-frame, as shown in Figure 7a. In Figure 7a, RO10~RO15 represent the second PRACH resource, and RO10~RO15 are configured on a sub-frame 1 (first sub-frame), a sub-frame 4 (second sub-frame) and a sub-frame 6 (first sub-frame) respectively. On the sub-frame 1, the parts of the RO10 and the RO11 are located on the DL frequency domain sub-band, and this portion of the PRACH resource is invalid; on the sub-frame 6, the parts of the RO14 and the RO15 are located on the DL frequency domain sub-band, and this portion of the PRACH resource is invalid. Here, the configuration of the two ROs corresponding to the second PRACH resource on one sub-frame is only used as an example for explanation, which is not limited.

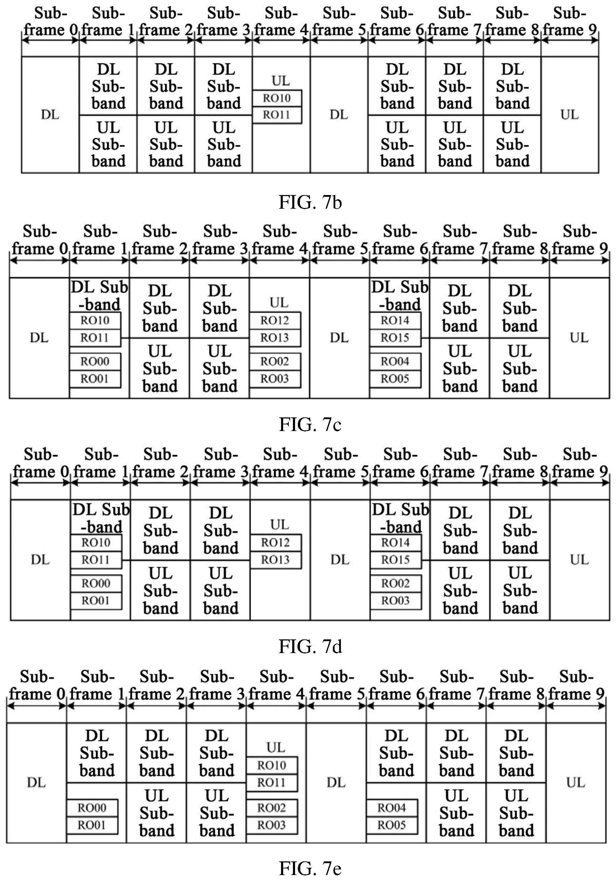

Mode a12, configuring the second PRACH resource on the second sub-frame, as shown in Figure 7b. In Figure 7b, RO10~RO11 represent the second PRACH resource, and the RO10~RO11 are configured on the sub-frame 4 (second sub-frame).

To avoid inconsistent understanding between the base station and the UE, the base station and the first UE may agree on the configuration of the second PRACH resource in advance, that is, whether the second PRACH resource is applicable to the SBFD sub-frame (i.e., the first sub-frame).

The base station may also send a first configuration signaling to the first UE, and the first configuration signaling indicates whether the second PRACH resource is applicable to the SBFD sub-frame (i.e., the first sub-frame), that is, indicates a first target sub-frame for configuring the second PRACH resource, wherein the first target sub-frame includes a first sub-frame and a second sub-frame, or the first target sub-frame includes the second sub-frame. Wherein, the first configuration signaling may be carried by RRC signaling/MAC-CE/DCI. The first UE configures the second PRACH resource based on the first configuration signaling, that is, configures the second PRACH resource on the first target sub-frame.

For example, the first configuration signaling indicates that the second PRACH resource is applicable to the first sub-frame, that is, the first target sub-frame includes the first sub-frame and the second sub-frame. At this time, the first UE configures the second PRACH resource on the first sub-frame and the second sub-frame.

For another example, the first configuration signaling indicates that the second PRACH resource is not applicable to the first sub-frame, that is, the first target sub-frame includes the second sub-frame. At this time, the first UE configures the second PRACH resource on the second sub-frame.

In one example, a first field (such as *RACH-Config for SBFD slot*) can be carried in the first configuration signaling to indicate whether the second PRACH resource is applicable to the first sub-frame.

For example, if the first field is a first preset value, the first configuration signaling indicates that the second PRACH resource is applicable to the first sub-frame, that is, the first target sub-frame includes the first sub-frame and the second sub-frame; if the first field is a second preset value or not configured, the first configuration signaling indicates that the second PRACH resource is not applicable to the first sub-frame, that is, the first target sub-frame only includes the second sub-frame. Here, the first field is not configured means that the second PRACH resource is configured in a default manner, that is, the second PRACH resource is not applicable to the first sub-frame.

In order to distinguish the above two applicable situations of the second resource, the bit width of the first field can be 1 respectively. In this case, the first preset value is 1, the second preset value is 0, or the first preset value is 0, the second preset value is 1. In the example of the present disclosure, the bit width of the first field may also be a value greater than 1, for example, the bit width of the first field is 2 or 3, etc., which is not limited.

After the first PRACH resource and the second PRACH resource are configured, the above block S64/block S42 may be achieved in the following two modes to complete the random access of the first UE.

Mode b11: sending the random access message to the base station by using the PRACH resource configured on the first sub-frame and the second sub-frame.

Mode b12: sending the random access message to the base station by using the PRACH resource configured on the first sub-frame.

In the case 11, the first PRACH resource and the second PRACH resource are the same, so the first PRACH resource and the second PRACH resource may not be distinguished.

In the example of the present disclosure, in order to avoid inconsistent understanding between the base station and the UE, the base station and the UE can agree on an available sub-frame in advance, such as agreeing in advance whether to use mode b11 or mode b12.

The base station may also send a second configuration signaling to the UE, and the second configuration signaling indicates an available sub-frame, that is, indicates an available third target sub-frame, wherein the third target sub-frame includes the first sub-frame and the second sub-frame, or the third target sub-frame includes the first sub-frame. The second configuration signaling may be carried by RRC signaling/MAC-CE/DCI. The first UE sends the random access message to the base station by using the PRACH resource based on the second configuration signaling, that is, using the PRACH resource configured on the third target sub-frame.

For example, the second configuration signaling indicates that the third target sub-frame includes the first sub-frame and the second sub-frame. At this time, the first UE sends the random access message to the base station by using the PRACH resource configured on the first sub-frame and the second sub-frame (such as mode b11).

For another example, the second configuration signaling indicates that the third target sub-frame includes the first sub-frame. At this time, the first UE sends the random access message to the base station by using the PRACH resource configured on the first sub-frame (such as mode b12).

In one example, a third field (such as *Legacy RACH-Config for SBFD UE*) can be carried in the second configuration signaling to indicate the third target sub-frame.

For example, if the third field is the first preset value, the second configuration signaling indicates that the third target sub-frame includes the first sub-frame and the second sub-frame; if the third field is the second preset value or not configured, the second configuration signaling indicates that the third target sub-frame only includes the first sub-frame. Here, the third field is not configured means that the third target sub-frame is configured in a default manner, that is, the third target sub-frame only includes the first sub-frame.

In order to distinguish the above two situations of the third target sub-frame, the bit width of the third field may be 1 respectively. In this case, the first preset value is 1, the second preset value is 0, or the first preset value is 0, the second preset value is 1. In the example of the present disclosure, the bit width of the third field may also be a value greater than 1, for example, the bit width of the third field may be 2 or 3, etc., which is not limited.

Case 12, the first PRACH resource is different from the second PRACH resource, that is, the first RO time-frequency resource is different from the second RO time-frequency resource, and the first preamble resource is different from the second preamble resource.

In the case 12, the base station separately configures the first PRACH resource, that is, the base station configures two PRACH resources, i.e., the first PRACH resource and the second PRACH resource. The PRACH resources obtained by the first UE include the first PRACH resource and the second PRACH resource. In this case, the above block S62 may be: configuring the obtained PRACH resources (the first PRACH resource and the second PRACH resource) on the first sub-frame and the second sub-frame.

In the example of the present disclosure, the first PRACH resource is different from the second PRACH resource, while the first PRACH resource and the second PRACH resource can be distinguished, that is, it is determined whether the PRACH resource configured on the first sub-frame and the second sub-frame is the first PRACH resource or the second PRACH resource. In this case, the above block S62 may be:
configuring the first PRACH resource on the first sub-frame and the second sub-frame, or configuring the first PRACH resource on the first sub-frame;
configuring the second PRACH resource on the first sub-frame and the second sub-frame, or configuring the second PRACH resource on the second sub-frame.

In the example of the present disclosure, the first UE configures the first PRACH resource and the second PRACH resource respectively, and the above block S62 can be subdivided into the following four modes.

Mode a21, configuring the first PRACH resource on the first sub-frame and the second sub-frame, and configuring the second PRACH resource on the first sub-frame and the second sub-frame, as shown in Figure 7c. In Figure 7c, RO00~RO05 represent the first PRACH resource, RO10~RO15 represent the second PRACH resource, and RO00~RO05 are configured on a sub-frame 1 (first sub-frame), a sub-frame 4 (second sub-frame) and a sub-frame 6(first sub-frame) respectively, RO10~RO15 are configured on the sub-frame 1, the sub-frame 4 and the sub-frame 6. Here, only two ROs corresponding to the first PRACH resource and two ROs corresponding to the second PRACH resource configured on one sub-frame are used as an example for explanation, and which is not intended to be limited.

Mode a22, configuring the first PRACH resource on the first sub-frame, and configuring the second PRACH resource on the first sub-frame and the second sub-frame, as shown in Figure 7d. In Figure 7d, RO00~RO03 represent the first PRACH resource, RO10~RO15 represent the second PRACH resource, RO00~RO03 are respectively configured on a sub-frame 1 (first sub-frame) and a sub-frame 6 (first sub-frame), RO10~RO15 are configured on the sub-frame 1, a sub-frame 4 (second sub-frame) and the sub-frame 6.

Method a23, configuring the first PRACH resource on the first sub-frame and the second sub-frame, and configuring the second PRACH resource on the second sub-frame, as shown in Figure 7e. In Figure 7e, RO00~RO05 represent the first PRACH resource, RO10~RO11 represent the second PRACH resource, and RO00~RO05 are configured on a sub-frame 1 (first sub-frame), a sub-frame 4 (second sub-frame) and a sub-frame 6 (first sub-frame) respectively, RO10~RO11 are configured on the sub-frame 4.

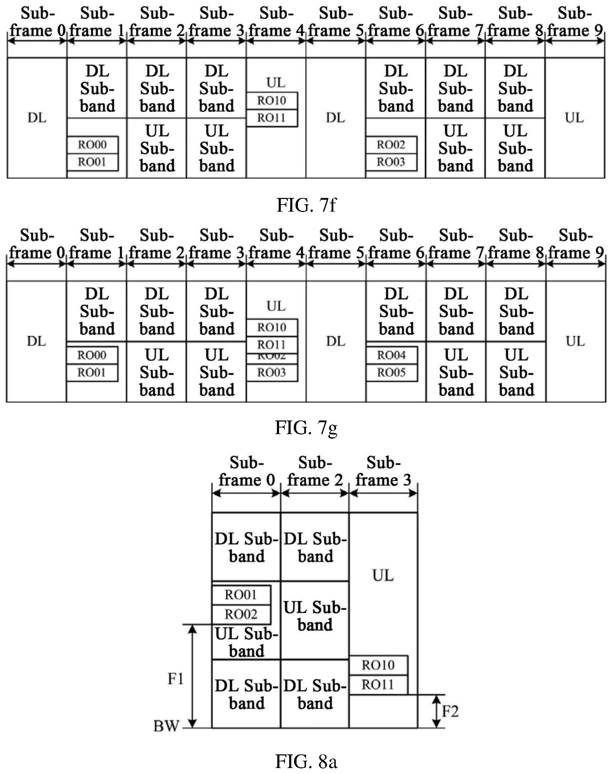

Mode a24, configuring the first PRACH resource on the first sub-frame, and configuring the second PRACH resource on the second sub-frame, as shown in Figure 7f. In Figure 7f, RO00~RO03 represent the first PRACH resource, RO10~RO11 represent the second PRACH resource, RO00~RO03 are respectively configured on a sub-frame 1 (first sub-frame) and a sub-frame 6 (first sub-frame), RO10~ RO11 are configured on a sub-frame 4 (second sub-frame).

To avoid inconsistent understanding between the base station and the UE, the base station and the first UE may agree on the configuration of the first PRACH resource and the second PRACH resource, that is, whether the first PRACH resource is applicable to the uplink sub-frame (i.e., the second sub-frame), and whether the second PRACH resource is applicable to the SBFD sub-frame (that is, the first sub-frame).

The base station may also send a first configuration signaling to the first UE, and the first configuration signaling indicates whether the first PRACH resource is applicable to the uplink sub-frame (i.e., the second sub-frame) and whether the second PRACH resource is applicable to the SBFD sub-frame (i.e., the first sub-frame), that is, indicates a first target sub-frame for configuring the second PRACH resource, wherein the first target sub-frame includes a first sub-frame and a second sub-frame, or the first target sub-frame includes the second sub-frame, and the second target sub-frame includes the first sub-frame and the second sub-frame, or the second target sub-frame includes the first sub-frame. Wherein, the first configuration signaling may be carried by RRC signaling/MAC-CE/DCI. The first UE configures the first PRACH resource and the second PRACH resource based on the first configuration signaling, that is, configures the first PRACH resource on the second target sub-frame, and configures the second PRACH resource on the first target sub-frame.

For example, the first configuration signaling indicates that the first PRACH resource is applicable to the second sub-frame, and the second PRACH resource is applicable to the first sub-frame, that is, the first target sub-frame includes the first sub-frame and the second sub-frame, and the second target sub-frame includes the first sub-frame and the second sub-frame (such as mode a21). At this time, the first UE configures the first PRACH resource on the first sub-frame and the second sub-frame, and configures the second PRACH resource on the first sub-frame and the second sub-frame.

For another example, the first configuration signaling indicates that the first PRACH resource is not applicable to the second sub-frame, and the second PRACH resource is not applicable to the first sub-frame, that is, the first target sub-frame includes the second sub-frame, and the second target sub-frame includes the first sub-frame (such as mode a24). At this time, the first UE configures the first PRACH resource on the first sub-frame, and configures the second PRACH resource on the second sub-frame.

In one example, a first field (such as *RACH-Config for SBFD slot*) and a second field (such as *RACH-Config for non-SBFD slot*) can be carried in the first configuration signaling. The first field is to indicate whether the second PRACH resource is applicable to the first sub-frame, and the second field is to indicate whether the first PRACH resource is applicable to the second sub-frame.

The setting of the first field can be referred to the above related description of the first field in case 11.

If the second field is a first preset value, the first configuration signaling indicates that the first PRACH resource is applicable to the second sub-frame, that is, the second target sub-frame includes the first sub-frame and the second sub-frame; if the second field is a second preset value or not configured, the first configuration signaling indicates that the first PRACH resource is not applicable to the second sub-frame, that is, the second target sub-frame only includes the first sub-frame. Here, the second field is not configured means that the first PRACH resource is configured in a default manner, that is, the first PRACH resource is not applicable to the second sub-frame.

In order to distinguish the above two applicable situations of the first resource, the bit width of the second field can be 1. In this case, the first preset value is 1, the second preset value is 0, or the first preset value is 0, the second preset value is 1. In the example of the present disclosure, the bit width of the second field may also be a value greater than 1, for example, the bit width of the second field may be 2 or 3, etc., which is not limited.

In the example of the present disclosure, in order to simplify the first configuration signaling, the base station and the first UE can also agree in advance whether the first PRACH resource is applicable to the second sub-frame, furthermore, the first field can only be carried in the first configuration signaling; the base station and the first UE may also agree in advance whether the second PRACH resource is applicable to the first sub-frame, furthermore, the second field can only be carried in the first configuration signaling, which is not limited.

After the first PRACH resource and the second PRACH resource are configured, the above block S64/block S42 can be achieved in the following two modes, to complete the random access of the first UE.

Mode b11, sending the random access message to the base station by using the PRACH resource configured on the first sub-frame and the second sub-frame.

Mode b12, sending the random access message to the base station by using the PRACH resource configured on the first sub-frame.

In case 12, the first PRACH resource is different from the second PRACH resource, therefore, the first PRACH resource and the second PRACH resource can be distinguished, that is, it is determined that an available PRACH resource on the first sub-frame (the first PRACH resource and/or the second PRACH resource), and that an available PRACH resource on the second sub-frame (the first PRACH resource and/or the second PRACH resource). In this case, the above method b11 can be subdivided into the following modes.

For example, an available PRACH resource on the first sub-frame is the first PRACH resource, and available PRACH resources on the second sub-frame are the first PRACH resource, the second PRACH resource, or the first PRACH resource and the second PRACH resource.

For another example, an available PRACH resource on the first sub-frame is the second PRACH resource, and available PRACH resources on the second sub-frame are the first PRACH resource, the second PRACH resource, or the first PRACH resource and the second PRACH resource;
for another example, available PRACH resources on the first sub-frame are the first PRACH resource and the second PRACH resource, and available PRACH resources on the second sub-frame are the first PRACH resource, the second PRACH resource, or the first PRACH resource and the second PRACH resource.

The above mode b12 can be subdivided into the following three modes. For example, an available PRACH resource on the first sub-frame is the first PRACH resource. For another example, an available PRACH resource on the first sub-frame is the second PRACH resource. For another example, available PRACH resources on the first sub-frame are the first PRACH resource and the second PRACH resource.

In the example of the present disclosure, in order to avoid inconsistent understanding between the base station and the UE, the base station and the UE can agree on available sub-frames and available PRACH resources in advance.

The base station may also send a second configuration signaling to the UE, and the second configuration signaling indicates an available sub-frame and an available PRACH resource, that is, indicates an available third target sub-frame, the first target PRACH resource available on the first sub-frame, the second target PRACH resource available on the second sub-frame; wherein the third target sub-frame includes the first sub-frame and the second sub-frame, or the third target sub-frame includes the first sub-frame; the first target PRACH resource includes the first PRACH resource, or the first target PRACH resource includes the second PRACH resource, or the first target PRACH resource includes the first PRACH resource and the second PRACH resource; the second target PRACH resource includes the first PRACH resource, or the second target PRACH resource includes the second PRACH resource, or the second target PRACH resource includes the first PRACH resource and the second PRACH resource.

The second configuration signaling may be carried by RRC signaling/MAC-CE/DCI. The first UE sends the random access message to the base station by using the PRACH resource based on the second configuration signaling, that is, by using the first PRACH resource / and the second PRACH resource configured on the third target sub-frame.

For example, the second configuration signaling indicates that the third target sub-frame includes the first sub-frame and the second sub-frame, the first target PRACH resource includes the first PRACH resource, and the second target PRACH resource includes the second PRACH resource. At this time, the first UE sends the random access message to the base station by using the first PRACH resource configured on the first sub-frame and the second PRACH resource configured on the second sub-frame.

For another example, the second configuration signaling indicates that the third target sub-frame includes the first sub-frame, and the first target PRACH resource includes the first PRACH resource and the second PRACH resource. At this time, the first UE sends the random access message to the base station by using the first PRACH resource and the second PRACH resource configured on the first sub-frame.

In the example of the present disclosure, a third field (such as *Legacy RACH-Config for SBFD UE*), a fourth field (such as *SBFD-RACH-Config for Legacy UL*) and a fifth field (such as *SBFD-RACH-Config for SBFD UL*) can be carried in the second configuration signaling, to indicate the third target sub-frame, the first target PRACH resource and the second target PRACH resource. The specific setting of the third field is referred to the above related description in the case 11.

The fourth field is to indicate the second target PRACH resource. For example, if the fourth field is a third preset value, the second configuration signaling indicates that the second target PRACH resource includes the first PRACH resource; if the fourth field is a fourth preset value, the second configuration signaling indicates that the second target PRACH resource includes the second PRACH resource; if the fourth field is a fifth preset value, the second configuration signaling indicates that the second target PRACH resource includes the first PRACH resource and the second PRACH resource.

In order to distinguish the above three situations of the second target PRACH resource, the bit width of the fourth field may be 2. For example, the third preset value is 00, the fourth preset value is 01, and the fifth preset value is 10. In the example of the present disclosure, the bit width of the fourth field may also be a value greater than 2, such as the bit width of the fourth field may be 3 or 4, etc., which is not limited.

The fifth field is to indicate the first target PRACH resource. For example, if the fifth field is the third preset value, the second configuration signaling indicates that the first target PRACH resource includes the first PRACH resource; if the fifth field is the fourth preset value, the second configuration signaling indicates that the first target PRACH resource includes the second PRACH resource; if the fifth field is the fifth preset value, the second configuration signaling indicates that the first target PRACH resource includes the first PRACH resource and the second PRACH resource.

In order to distinguish the above three situations of first target PRACH resource, the bit width of the fifth field may be 2. For example, the third preset value is 00, the fourth preset value is 01, and the fifth preset value is 10. In the example of the present disclosure, the bit width of the fifth field may also be a value greater than 2, such as the bit width of the fifth field may be 3 or 4, etc., which is not limited.

In the example of the present disclosure, in order to simplify the second configuration signaling, the base station and the first UE can also agree on the first target PRACH resource and second target PRACH resource in advance, therefore, only the third field (such as *Legacy RACH-Config for SBFD UE*) can be carried in the second configuration signaling to indicate the third target sub-frame.

In order to simplify the second configuration signaling, the base station and the first UE can also agree on the first target PRACH resource in advance, therefore, only the third field (such as *Legacy RACH-Config for SBFD UE*) and the fourth field (such as *SBFD-RACH-Config for Legacy UL*) can be carried in the second configuration signaling to indicate the third target sub-frame and the second target PRACH resource.

In order to simplify the second configuration signaling, the base station and the first UE can also agree on the second target PRACH resource in advance, therefore, only the third field (such as *Legacy RACH-Config for SBFD UE*) and the fifth field (such as *SBFD-RACH-Config for SBFD UL*) can be carried in the second configuration signaling to indicate the third target sub-frame and the first target PRACH resource.

In the example of the present disclosure, the base station and the first UE may agree in advance on one or more of the third target sub-frame, the first target PRACH resource, the second target PRACH resource, etc. When part or all of information is agreed upon in advance, the second configuration signaling may no longer carry a field of relevant information.

Case 13, the first PRACH resource partially overlaps with the second PRACH resource, specifically as follows: (1) the first RO time-frequency resource partially overlaps with the second RO time-frequency resource, and the first preamble resource is different from the second preamble resource; (2) the first RO time-frequency resource is different from the second RO time-frequency resource, and the first preamble resource partially overlaps with the second preamble resource; (3) the first RO time-frequency resource partially overlaps with the second RO time-frequency resource, the first preamble resource partially overlaps with the second preamble resource.
(1) The first RO time-frequency resource partially overlaps with the second RO time-frequency resource, and the first preamble resource is different from the second preamble resource. In this case, even if the first PRACH resource and the second PRACH resource are configured on the same sub-frame, which will not affect the detection and identification of the UE by the base station.

In this case, the above block S62 may be:
configuring the first PRACH resource on the first sub-frame and the second sub-frame, or configuring the first PRACH resource on the first sub-frame;
configuring the second PRACH resource on the first sub-frame and the second sub-frame, or configuring the second PRACH resource on the second sub-frame.

In the example of the present disclosure, the first UE configures the first PRACH resource and the second PRACH resource respectively, and the above block S62 can be subdivided into the following modes a21~a24. Taking a mode a23 as an example, as shown in Figure 7g, the first UE configures the first PRACH resource on the first sub-frame and the second sub-frame, and configures the second PRACH resource on the second sub-frame. In Figure 7g, RO00~RO05 represent the first PRACH resource, RO10~RO11 represent the second PRACH resource, and RO00~RO05 are configured on a sub-frame 1 (first sub-frame), a sub-frame 4 (second sub-frame) and a sub-frame 6 (first sub-frame) respectively, RO10~RO11 are configured on the sub-frame 4.

After the first PRACH resource and the second PRACH resource are configured, the above block S64/block S42 can be achieved in two modes, i.e., modes b11~ b12 to complete the random access of the first UE.

The description of this situation is relatively simple. Configuration and use of the PRACH resource can be referred to the description of the case 12.

(2) The first RO time-frequency resource is different from the second RO time-frequency resource, and the first preamble resource partially overlaps with the second preamble resource. In this case, even if the first PRACH resource and the second PRACH resource are configured on the same sub-frame, which will not affect the detection and identification of the UE by the base station.

In this case, the above block S62 may be:
configuring the first PRACH resource on the first sub-frame and the second sub-frame, or configuring the first PRACH resource on the first sub-frame;
configuring the second PRACH resource on the first sub-frame and the second sub-frame, or configuring the second PRACH resource on the second sub-frame.

In the example of the present disclosure, the first UE configures the first PRACH resource and the second PRACH resource respectively, and the above block S62 can be subdivided into the following modes a21~a24.

After the first PRACH resource and the second PRACH resource are configured, the above block S64/block S42 can be achieved in two modes, i.e., modes b11~ b12 to complete the random access of the first UE.

The description of this situation is relatively simple. Configuration and use of PRACH resources can be referred to the description of the case 12.

(3) The first RO time-frequency resource partially overlaps with the second RO time-frequency resource, and the first preamble resource partially overlaps with the second preamble resource. In this case, the first PRACH resource and the second PRACH resource are configured on the same sub-frame, which will affect the detection and identification of the UE by the base station.

In this case, the above block S62 may be:
configuring the first PRACH resource on the first sub-frame and the second sub-frame, or configuring the first PRACH resource on the first sub-frame;
configuring the second PRACH resource on the first sub-frame and the second sub-frame, or configuring the second PRACH resource on the second sub-frame.

In the example of the present disclosure, the first UE configures the first PRACH resource and the second PRACH resource respectively, and the above block S62 can be subdivided into the following modes a21~a24.

In some examples, in order to reduce the impact on the detection and identification of the UE by the base station and protect the access performance of the second UE, when configuring the PRACH resource, the first UE can configure the first PRACH resource on the first sub-frame, and configure the second PRACH resource on the second time granularity. At this time, the first UE can also configure the second PRACH resource on the first time granularity, since the second UE only can configure the second PRACH resource on the second time granularity, and the first UE configure the second PRACH resource on the first time granularity, which will not affect the identification of the UE by the base station.

In some examples, in order to reduce the impact on the detection and identification of the UE by the base station and protect the access performance of the second UE, when configuring the PRACH resource, the first UE can configure the first PRACH resource on the first sub-frame and the second sub-frame, configure the second PRACH resource on the first sub-frame and/or the second sub-frame, and invalidate a third RO time-frequency resource in the first RO time-frequency resource, and the third RO time-frequency resource is a portion where the first RO time-frequency resource overlaps with the second RO time-frequency resource.

In the example of the present disclosure, the second PRACH resource may be configured on the first sub-frame and the second sub-frame, or may be configured only on the second sub-frame. The first UE invalidates a portion of the first RO time-frequency resource that overlaps with the second RO time-frequency resource, and validates a portion of the second RO time-frequency resource that overlaps with the first RO time-frequency resource. This effectively protects the access performance of the second UE.

In the example of the present disclosure, the first RO time-frequency resource partially overlaps with the second RO time-frequency resource, and the first preamble resource partially overlaps with the second preamble resource, which causes that there is only a small probability of deteriorating the access performance of the second UE. To simplify the operation of the first UE, the first UE may not execute the above-mentioned operation of reducing the impact on detection and identification of the UE by the base station.

After the first PRACH resource and the second PRACH resource are configured, the above block S64/block S42 can be achieved in two modes, i.e., modes b11~ b12 to complete the random access of the first UE.

The description of this situation is relatively simple. Configuration and use of PRACH resources can be referred to the description of the case 12.

Case 2, configuring the PRACH resources non-uniformly, specifically includes: case 21, the first PRACH resource includes one RO time-frequency resource (such as the first RO time-frequency resource) and two preamble resources corresponding to the RO time-frequency resource (such as the first preamble resource and the second preamble resource); case 22, the first PRACH resource includes two RO time-frequency resources (such as the first RO time-frequency resource and the second RO time-frequency resource) and one preamble resource corresponding to the two RO time-frequency resources (such as the first preamble resource); case 23, the first PRACH resource includes two RO time-frequency resources (such as the first RO time-frequency resource and the second RO time-frequency resource) and two preamble resources corresponding to the two RO time-frequency resources (such as the first preamble resource and the second preamble resource).

Case 21, the first PRACH resource includes one RO time-frequency resource (such as the first RO time-frequency resource) and two preamble resources (such as the first preamble resource and the second preamble resource). Case 21 can be further subdivided into: (1) the first RO time-frequency resource and the second RO time-frequency resource are the same; (2) the first RO time-frequency resource is different from the second RO time-frequency resource; (3) the first RO time-frequency resource partially overlaps with the second RO time-frequency resource.
(1) The first RO time-frequency resource and the second RO time-frequency resource are the same.

In this case, the block S62 may be: configuring the obtained PRACH resource (which includes the first PRACH resource and the second PRACH resource) on the first sub-frame and the second sub-frame. For details, it can be referred to the above related description of the case 11.

In the example of the present disclosure, the first PRACH resource includes two preamble resources, i.e., the first preamble resource and the second preamble resource. When configuring the first PRACH resource, one or two of the first preamble resource and the second preamble resource can be configured. In a case that the second PRACH resource also includes the second preamble resource, after the first PRACH resource and the second PRACH resource are configured in block S62, the configuration of preamble resources is as shown in Table 1.

**Table 1**

| First Sub-frame | Second Sub-frame |
|---|---|
| Preamble Resource 1 | Preamble Resource 2 |
| Preamble Resource 1 | Preamble Resource 1,Preamble Resource 2 |
| Preamble Resource 1,Preamble Resource 2 | Preamble Resource 2 |
| Preamble Resource 1,Preamble Resource 2 | Preamble Resource 1,Preamble Resource 2 |

In Table 1, a preamble resource 1 represents the first preamble resource, and a preamble resource 2 represents the second preamble resource. Each row in Table 1 represents the configuration of the preamble resources.

After the first PRACH resource and the second PRACH resource are configured, the above block S64/block S42 may be achieved in the following two modes b11~ b12 to complete the random access of the first UE.

Based on the situation shown in above Table 1, and the first RO time-frequency resource and the second RO time-frequency resource being the same, the first UE may consider the first preamble resource and the second preamble respectively when executing block S64/block S42, the mode b11 can be subdivided into modes c11~c12, and mode b12 can be subdivided into modes c21~c22.

Mode c11, sending the random access message to the base station by using the RO time-frequency resource and the first preamble resource configured on the first sub-frame and the second sub-frame.

Mode c12, sending the random access message to the base station by using the RO time-frequency resource, the first preamble resource, and the second preamble resource configured on the first sub-frame and the second sub-frame.

Mode c21, sending the random access message to the base station by using the RO time-frequency resource and the first preamble resource configured on the first sub-frame.

Mode c22, sending the random access message to the base station by using the RO time-frequency resource, the first preamble resource, and the second preamble resource configured on the first sub-frame.

In this case, the above-mentioned RO time-frequency resource is the first RO time-frequency resource or the second RO time-frequency resource.

In the example of the present disclosure, in order to avoid inconsistent understanding between the base station and the UE, the base station and the UE can agree on the mode of use in advance, such as agreeing in advance on which mode of modes c11~c12 and modes c21~c22 to be used.

The base station may also send a second configuration signaling to the UE, and the second configuration signaling indicates an available sub-frame and an available preamble resource, that is, indicates an available third target sub-frame and an available target preamble resource, wherein the third target sub-frame includes a first sub-frame and a second sub-frame, or the third target sub-frame includes the first sub-frame; the target preamble resource includes the first preamble resource, or the target preamble resource includes the first preamble resource and the second preamble resource. The second configuration signaling may also include an available first target PRACH resource and second target PRACH resource. For details, it can be referred to the relevant description of the case 12, which is not limited.

For example, the second configuration signaling indicates that the third target sub-frame includes a first sub-frame and a second sub-frame, and the target preamble resource includes a first preamble resource and a second preamble resource. At this time, the first UE sends the random access message to the base station by using the RO time-frequency resource configured on the first sub-frame and the second sub-frame, the first preamble resource, and the second preamble resource (such as mode c12).

For another example, the second configuration signaling indicates that the third target sub-frame includes the first sub-frame, and the target preamble resource includes the first preamble resource. At this time, the first UE sends the random access message to the base station by using the RO time-frequency resource and the first preamble resource configured on the first sub-frame (such as mode c21).

In one example, a third field (such as *Legacy RACH-Config for SBFD UE*) and a sixth field can be carried in the second configuration signaling to indicate the third target sub-frame and the target preamble resource. The setting of the third field can be referred to the above related description of the third field in case 11.

The sixth field is to indicate the target preamble resource. For example, if the sixth field is a first preset value, the second configuration signaling indicates that the target preamble resource includes the first preamble resource; if the sixth field is a second preset value or not configured, the second configuration signaling indicates that the target preamble resource includes a first preamble resource and a second preamble resource. Here, the sixth field is not configured means that the target preamble resource is configured in a default manner, that is, the target preamble resource includes a first preamble resource and a second preamble resource.

In order to distinguish the above two target preamble resources, the bit width of the sixth field can be 1. In this case, the first preset value is 1 and the second preset value is 0, or the first preset value is 0 and the second preset value is 1. In the example of the present disclosure, the bit width of the sixth field may also be a value greater than 1, such as the bit width of the sixth field is 2 or 3, etc., which is not limited.

(2) The first RO time-frequency resource is different from the second RO time-frequency resource.

In this case, the above block S62 may be:
configuring the first PRACH resource on the first sub-frame and the second sub-frame, or configuring the first PRACH resource on the first sub-frame;
configuring the second PRACH resource on the first sub-frame and the second sub-frame, or configuring the second PRACH resource on the second sub-frame.

In the example of the present disclosure, the first UE configures the first PRACH resource and the second PRACH resource respectively, and the above block S62 can be subdivided into the following modes a21~a24.

In the example of the present disclosure, the first PRACH resource includes two preamble resources, i.e., a first preamble resource and a second preamble resource. When configuring the first PRACH resource, one or two of the first preamble resource and the second preamble resource can be configured. When the second PRACH resource also includes the second preamble resource, after the first PRACH resource and the second PRACH resource are configured in the above block S62, the configuration of preamble resources is as shown in the above Table 1.

After the first PRACH resource and the second PRACH resource are configured, the above block S64/block S42 can be achieved in two modes, i.e., modes b11~b12 to complete the random access of the first UE.

When executing block S64/block S42, the first UE may consider the first preamble resource and the second preamble resource respectively. Mode b11 may be subdivided into modes c11~c12, and mode b12 may be subdivided into modes c21~c22.

In this case, the RO time-frequency resource configuration in modes c11~c12 and modes c21~c22 is the first RO time-frequency resource configuration and/or the second RO time-frequency resource configuration. For details, it may be determined based on the selected available PRACH resources.

The description of this situation is relatively simple. Configuration and use of the PRACH resources can be referred to the related description of the case 12 and the above related description of situation 21(1).

(3) The first RO time-frequency resource partially overlaps with the second RO time-frequency resource.

In this case, the above block S62 may be:
configuring the first PRACH resource on the first sub-frame and the second sub-frame, or configuring the first PRACH resource on the first sub-frame;
configuring the second PRACH resource on the first sub-frame and the second sub-frame, or configuring the second PRACH resource on the second sub-frame.

In the example of the present disclosure, the first UE configures the first PRACH resource and the second PRACH resource respectively, and the above block S62 can be subdivided into the following modes a21~a24.

After the first PRACH resource and the second PRACH resource are configured in the above block S62, the configuration of preamble resources is as shown in the above Table 1.

In some examples, in order to reduce the impact on the detection and identification of the UE by the base station and protect the access performance of the second UE, the first UE may configure the first PRACH resource on the first sub-frame, and configure the second PRACH resource on the second time granularity.

In some examples, in order to reduce the impact on the detection and identification of the UE by the base station and protect the access performance of the second UE, the first UE may configure the first PRACH resource on the first sub-frame and the second sub-frame, configure the second PRACH resource on the first sub-frame and/or the second sub-frame, and invalidate a third RO time-frequency resource in a first RO time-frequency resource, and the third RO time-frequency resource is the portion where the first RO time-frequency resource overlaps with the second RO time-frequency resource.

In the example of the present disclosure, the second PRACH resource may be configured on the first sub-frame and the second sub-frame, or may be configured only on the second sub-frame. The first UE invalidates a portion of the first RO time-frequency resource which overlaps with the second RO time-frequency resource, and validates a portion of the second RO time-frequency resource which overlaps with the first RO time-frequency resource. This effectively protects the access performance of the second UE.

In the example of the present disclosure, the first RO time-frequency resource partially overlaps with the second RO time-frequency resource, and a preamble resource corresponding to the first RO time-frequency resource partially overlaps with a preamble resource corresponding to the second RO time-frequency resource, which causes that there is only a small probability of deteriorating the access performance of the second UE. To simplify the operation of the first UE, the first UE may not execute the above-mentioned operation of reducing the impact on detection and identification of the UE by the base station.

In some examples, in order to reduce the impact on the detection and identification of the UE by the base station and protect the access performance of the second UE, when configuring the first PRACH resource on the second sub-frame, the first UE can configure the first RO time-frequency resource on the second sub-frame, while only configure the first preamble resource on the second sub-frame. This effectively protects the access performance of the second UE.

After the first PRACH resource and the second PRACH resource are configured, the above block S64/block S42 can be achieved in two modes, i.e., modes b11~b12 to complete the random access of the first UE.

When executing block S64/block S42, the first UE may consider the first preamble resource and the second preamble resource respectively. Mode b11 may be subdivided into modes c11~c12, and mode b12 may be subdivided into modes c21~c22.

In this case, the RO time-frequency resource configuration in modes c11~c12 and modes c21~c22 is the first RO time-frequency resource configuration and/or the second RO time-frequency resource configuration. For details, it may be determined based on the selected available PRACH resources.

The description of this situation is relatively simple. Configuration and use of the PRACH resources can be referred to the related description of the case 12 and the above related description of situation 21(1).

Case 22, the first PRACH resource includes two RO time-frequency resources (such as the first RO time-frequency resource and the second RO time-frequency resource) and one preamble resource (such as the first preamble resource). Case 22 can be further subdivided into: (1) the first preamble resource and the second preamble resource are the same; (2) the first preamble resource is different from the second preamble resource; (3) the first preamble resource partially overlaps with the second preamble resource.
(1) The first preamble resource and the second preamble resource are the same.

In this case, the above block S62 may be:
configuring the first PRACH resource on the first sub-frame and the second sub-frame, or configuring the first PRACH resource on the first sub-frame;
configuring the second PRACH resource on the first sub-frame and the second sub-frame, or configuring the second PRACH resource on the second sub-frame.

In the example of the present disclosure, the first UE configures the first PRACH resource and the second PRACH resource respectively, and the above block S62 can be subdivided into the following modes a21~a24.

In the example of the present disclosure, the first PRACH resource includes two RO time-frequency resources, i.e., the first RO time-frequency resource and the second RO time-frequency resource. When configuring the first PRACH resource, one or both of the first RO time-frequency resource and the second RO time-frequency resource can be configured. When the second PRACH resource also includes the second RO time-frequency resource, after the first PRACH resource and the second PRACH resource are configured in the above block S62, the configuration of the RO time-frequency resources is as shown in Table 2.

**Table 2**

| First Sub-frame | Second Sub-frame |
|---|---|
| RO Configuration 1 | RO Configuration 2 |
| RO Configuration 1 | RO Configuration 1,RO Configuration 2 |
| RO Configuration 1,RO Configuration 2 | RO Configuration 2 |
| RO Configuration 1,RO Configuration 2 | RO Configuration 1,RO Configuration 2 |

In Table 2, RO configuration 1 represents the first RO time-frequency resource, and RO configuration 2 represents the second RO time-frequency resource. Each row in Table 2 represents the configuration of RO time-frequency resources. At this time, the preamble resources on the first sub-frame and the second sub-frame are the same, that is, the first preamble resource and the second preamble resource.

After the first PRACH resource and the second PRACH resource are configured, the above block S64/block S42 may be achieved in the following two modes b11~b12 to complete the random access of the first UE.

Based on the situation shown in Table 2 above, and the first preamble resource and the second preamble resource being the same, the first UE may consider the first RO time-frequency resource and the second RO time-frequency resource respectively when executing block S64/block S42, the mode b11 can be subdivided into modes c111~c112, and mode b12 can be subdivided into modes c211~c212.

Mode c111, sending the random access message to the base station by using the first RO time-frequency resource and the preamble resource configured on the first sub-frame and the second sub-frame.

Mode c112, sending the random access message to the base station by using the first RO time-frequency resource, the second RO time-frequency resource, and the preamble resource configured on the first sub-frame and the second sub-frame.

Mode c211, sending the random access message to the base station by using the first RO time-frequency resource and preamble resource configured on the first sub-frame.

Mode c212, sending the random access message to the base station by using the first RO time-frequency resource, the second RO time-frequency resource and the preamble resource configured on the first sub-frame.

In this case, the above-mentioned preamble resource is a first preamble resource or a second preamble resource.

In the example of the present disclosure, in order to avoid inconsistent understanding between the base station and the UE, the base station and the UE can agree on the mode of use in advance, such as agreeing in advance on which mode of modes c111~c112 and modes c211~c212 to be used.

The base station may also send a second configuration signaling to the UE, and the second configuration signaling indicates an available third target sub-frame and an available target RO time-frequency resource, wherein the third target sub-frame includes a first sub-frame and a second sub-frame, or the third target sub-frame includes the first sub-frame; the target RO time-frequency resource includes the first RO time-frequency resource, or the target RO time-frequency resource includes the first RO time-frequency resource and the second RO time-frequency resource. The second configuration signaling may also include an available first target PRACH resource and second target PRACH resource. For details, it can be referred to the relevant description of the case 12, which is not limited.

For example, the second configuration signaling indicates that the third target sub-frame includes a first sub-frame and a second sub-frame, and the target RO time-frequency resource includes a first RO time-frequency resource and a second RO time-frequency resource. At this time, the first UE sends the random access message to the base station by using the first RO time-frequency resource, the second RO time-frequency resource and the preamble resource configured on the first sub-frame and the second sub-frame (such as mode c112).

For another example, the second configuration signaling indicates that the third target sub-frame includes the first sub-frame, and the target RO time-frequency resource includes the first RO time-frequency resource. At this time, the first UE sends the random access message to the base station by using the first RO time-frequency resource and preamble resource configured on the first sub-frame (such as mode c211).

In one example, a third field (such as *Legacy RACH-Config for SBFD UE*) and a seventh field can be carried in the second configuration signaling to indicate the third target sub-frame and the target RO time-frequency resource. The setting of the third field can be referred to the above related description of the third field in case 11.

The seventh field is to indicate target RO time-frequency resource. For example, if the seventh field is a first preset value, the second configuration signaling indicates that the target RO time-frequency resource includes the first RO time-frequency resource; if the seventh field is a second preset value or not configured, the second configuration signaling indicates that the target RO time-frequency resource includes a first RO time-frequency resource and a second RO time-frequency resource. Here, the seventh field is not configured means that the target preamble resource is configured in a default manner, that is, the target RO time-frequency resource includes the first RO time-frequency resource and the second RO time-frequency resource.

In order to distinguish the above two target RO time-frequency resources, the bit width of the seventh field can be 1. In this case, the first preset value is 1 and the second preset value is 0, or the first preset value is 0 and the second preset value is 1. In the example of the present disclosure, the bit width of the seventh field may also be a value greater than 1, such as the bit width of the seventh field is 2 or 3, etc., which is not limited.

(2) The first preamble resource is different from the second preamble resource.

In this case, the above block S62 may be:
configuring the first PRACH resource on the first sub-frame and the second sub-frame, or configuring the first PRACH resource on the first sub-frame;
configuring the second PRACH resource on the first sub-frame and the second sub-frame, or configuring the second PRACH resource on the second sub-frame.

In the example of the present disclosure, the first UE configures the first PRACH resource and the second PRACH resource respectively, and the above block S62 can be subdivided into the following modes a21~a24.

In the example of the present disclosure, the first PRACH resource includes two RO time-frequency resources, i.e., the first RO time-frequency resource and the second RO time-frequency resource. When configuring the first PRACH resource, one or both of the first RO time-frequency resource and the second RO time-frequency resource can be configured. When the second PRACH resource also includes the second RO time-frequency resource, after the first PRACH resource and the second PRACH resource are configured in the above block S62, the configuration of the RO time-frequency resources is as shown in the above Table 2.

At this time, the first preamble resource is different from the second preamble resource. After the first PRACH resource and the second PRACH resource are configured in the above block S62, the configuration of the preamble resources is as shown in the above Table 1.

After the first PRACH resource and the second PRACH resource are configured, the above block S64/block S42 may be achieved in the following two modes b11~ b12 to complete the random access of the first UE.

Based on the case shown in Table 2 above, and the first preamble resource and the second preamble resource being different, the first UE may consider the first RO time-frequency resource and the second RO time-frequency resource respectively when executing block S64/block S42, the mode b11 can be subdivided into modes c111~c112, and mode b12 can be subdivided into modes c211~c212.

In this case, the preamble resource in modes c111~c112 and modes c211~c212 is the first preamble resource and/or the second preamble resource. The details may be determined based on the selected available PRACH resources.

In the example of the present disclosure, in order to avoid inconsistent understanding between the base station and the UE, the base station and the UE can agree on the mode of use in advance, such as agreeing in advance on which mode of modes c111~c112 and modes c211~c212 to be used.

The base station may also send a second configuration signaling to the UE, and the second configuration signaling indicates an available third target sub-frame and an available target RO time-frequency resource, wherein the third target sub-frame includes a first sub-frame and a second sub-frame, or the third target sub-frame includes the first sub-frame; the target RO time-frequency resource includes the first RO time-frequency resource, or the target RO time-frequency resource includes the first RO time-frequency resource and the second RO time-frequency resource. The second configuration signaling may also include an available first target PRACH resource and second target PRACH resource. For details, it can be referred to the relevant description of the case 12, which is not limited.

In one example, a third field (such as *Legacy RACH-Config for SBFD UE*) and a seventh field can be carried in the second configuration signaling to indicate the third target sub-frame and the target preamble resource. The setting of the third field can be referred to the above related description of the third field in case 11. The setting of the seventh field can be referred to the above related description of the seventh field in case 22(1).

(3) The first preamble resource partially overlaps with the second preamble resource.

In this case, the above block S62 may be:
configuring the first PRACH resource on the first sub-frame and the second sub-frame, or configuring the first PRACH resource on the first sub-frame;
configuring the second PRACH resource on the first sub-frame and the second sub-frame, or configuring the second PRACH resource on the second sub-frame.

In the example of the present disclosure, the first UE configures the first PRACH resource and the second PRACH resource respectively, and the above block S62 can be subdivided into the following modes a21~a24.

In the example of the present disclosure, the first PRACH resource includes two RO time-frequency resources, i.e., the first RO time-frequency resource and the second RO time-frequency resource. When configuring the first PRACH resource, one or both of the first RO time-frequency resource and the second RO time-frequency resource can be configured. When the second PRACH resource also includes the second RO time-frequency resource, after the first PRACH resource and the second PRACH resource are configured in the above block S62, the configuration of the RO time-frequency resources is as shown in the above Table 2.

At this time, the first preamble resource partially overlaps with the second preamble resource. After the first PRACH resource and the second PRACH resource are configured in the above block S62, the configuration of preamble resources is as shown in the above Table 1.

In some examples, in order to reduce the impact on the detection and identification of the UE by the base station and protect the access performance of the second UE, the first UE may configure the first PRACH resource on the first sub-frame, and configure the second PRACH resource on the second time granularity.

In some examples, the first preamble resource partially overlaps with the second preamble resource, and the RO time-frequency resources corresponding to the first preamble resource (the first RO time-frequency resource and the second RO time-frequency resource) partially overlap with the RO time-frequency resource corresponding to the second preamble resource (the second RO time-frequency resource), which causes that there is only a small probability of deteriorating the access performance of the second UE. To simplify the operation of the first UE, the first UE may not execute the above-mentioned operation of reducing the impact on detection and identification of the UE by the base station.

In some examples, in order to reduce the impact on the detection and identification of the UE by the base station and protect the access performance of the second UE, when configuring the first PRACH resource on the second sub-frame, the first UE can configure the first preamble resource on the second sub-frame, while only configure the first RO time-frequency resource on the second sub-frame. This effectively protects the access performance of the second UE.

After the first PRACH resource and the second PRACH resource are configured, the above block S64/block S42 may be achieved in the following two modes, i.e., modes b11~b12 to complete the random access of the first UE.

Based on the case shown in Table 2 above, and the first preamble resource partially overlapping with the second preamble resource, the first UE may consider the first RO time-frequency resource and the second RO time-frequency resource respectively when executing block S64/block S42, the mode b11 can be subdivided into modes c111~c112, and mode b12 can be subdivided into modes c211~c212.

In this case, the preamble resources in modes c111~c112 and modes c211~c212 are the first preamble resource and/or the second preamble resource. The details may be determined based on the selected available PRACH resources.

In the example of the present disclosure, in order to avoid inconsistent understanding between the base station and the UE, the base station and the UE can agree on the mode of use in advance, such as agreeing in advance on which mode of modes c111~c112 and modes c211~c212 to be used.

The base station may also send a second configuration signaling to the UE, and the second configuration signaling indicates an available third target sub-frame and an available target RO time-frequency resource, wherein the third target sub-frame includes a first sub-frame and a second sub-frame, or the third target sub-frame includes the first sub-frame; the target RO time-frequency resource includes the first RO time-frequency resource, or the target RO time-frequency resource includes the first RO time-frequency resource and the second RO time-frequency resource. The second configuration signaling may also include an available first target PRACH resource and second target PRACH resource. For details, it can be referred to the relevant description of the case 12, which is not limited.

In one example, a third field (such as *Legacy RACH-Config for SBFD UE*) and a seventh field can be carried in the second configuration signaling to indicate the third target sub-frame and the target preamble resource. The setting of the third field can be referred to the above related description of the third field in case 11. The setting of the seventh field can be referred to the above related description of the seventh field in case 22(1).

Case 23, the first PRACH resource includes two RO time-frequency resources (such as the first RO time-frequency resource and the second RO time-frequency resource) and one preamble resource (such as the first preamble resource and the second preamble resource).

In this case, the above block S62 may be:
configuring the first PRACH resource on the first sub-frame and the second sub-frame, or configuring the first PRACH resource on the first sub-frame;
configuring the second PRACH resource on the first sub-frame and the second sub-frame, or configuring the second PRACH resource on the second sub-frame.

In the example of the present disclosure, the first UE configures the first PRACH resource and the second PRACH resource respectively, and the above block S62 can be subdivided into the following modes a21~a24.

In the example of the present disclosure, the first PRACH resource includes two RO time-frequency resources, i.e., the first RO time-frequency resource and the second RO time-frequency resource. When configuring the first PRACH resource, one or both of the first RO time-frequency resource and the second RO time-frequency resource can be configured. When the second PRACH resource also includes the second RO time-frequency resource, after the first PRACH resource and the second PRACH resource are configured in the above block S62, the configuration of RO time-frequency resources is as shown in the above Table 2.

At this time, the first preamble resource is different from the second preamble resource. After the first PRACH resource and the second PRACH resource are configured in the above block S62, the configuration of preamble resources is as shown in the above Table 1.

After the first PRACH resource and the second PRACH resource are configured, the above block S64/block S42 may be achieved in two modes, i.e., modes b11~b12, to complete the random access of the first UE.

Based on the case shown in Table 2 above, and the first preamble resource is different from the second preamble resource, the first UE may consider the first RO time-frequency resource and the second RO time-frequency resource respectively, and consider the first preamble resource and the second preamble resource respectively when executing block S64/block S42. At this time, for the use of the first RO time-frequency resource and the second RO time-frequency resource, the mode b11 can be subdivided into modes c111~c112, and mode b12 can be subdivided into modes c211~c212. For the use of the first preamble resource and the second preamble resource, the mode b11 can be subdivided into modes c11~c12, and mode b12 can be subdivided into modes c21~c22.

In the example of the present disclosure, in order to avoid inconsistent understanding between the base station and the UE, the base station and the UE can agree on the mode of use in advance, such as agreeing in advance on which mode of modes c111~c112 and modes c211~c212 to be used.

The base station may also send a second configuration signaling to the UE, and the second configuration signaling indicates an available third target sub-frame, an available target preamble resource and an available target RO time-frequency resource, wherein the third target sub-frame includes a first sub-frame and a second sub-frame, or the third target sub-frame includes the first sub-frame; the target RO time-frequency resource includes the first RO time-frequency resource, or the target RO time-frequency resource includes the first RO time-frequency resource and the second RO time-frequency resource; the target preamble resource includes the first preamble resource, or the target preamble resource includes the first preamble resource and the second preamble resource. The second configuration signaling may also include an available first target PRACH resource and second target PRACH resource. For details, it can be referred to the relevant description of the case 12, which is not limited.

In an example, a third field (such as *Legacy RACH-Config for SBFD UE*), a sixth field and a seventh field can be carried in the second configuration signaling to indicate the third target sub-frame, the target preamble resource and the target RO time-frequency resource. The setting of the third field can be referred to the above related description of the third field in case 11. The setting of the sixth field can be referred to the above related description of the sixth field in case 21(1). The setting of the seventh field can be referred to the above related description of the seventh field in case 22(1).

In the example of the present disclosure, the base station and the first UE may agree in advance on one or more of the third target sub-frame, the first target PRACH resource, the second target PRACH resource, the target preamble resource, and the target RO time-frequency resource, etc. When part or all of information is agreed upon in advance, the second configuration signaling may no longer carry a field of relevant information, if the third target sub-frame is agreed upon in advance, the second configuration signaling may not carry the third filed. If the base station and the first UE agree in advance on all of the information, the second configuration signaling may not carry the third field, the fourth field, the fifth field, the sixth field and the seventh field. If no information is agreed between the base station and the first UE, the second configuration signaling may carry the third field, the fourth field, the fifth field, the sixth field and the seventh field.

In some examples, the first RO time-frequency resource indicates a first frequency domain starting point, and the second RO time-frequency resource indicates a second frequency domain starting point. Based on the first frequency domain starting point and the second frequency domain starting point, the first UE can determine a frequency domain position of the first RO time-frequency resource on the sub-frame, and a frequency domain position of the second RO time-frequency resource on the sub-frame; and then the first UE configures the first PRACH resource on the first sub-frame/or the second sub-frame by taking the first frequency domain starting point as a starting point; and configures the second PRACH resource on the first sub-frame and/or the second sub-frame by taking the second frequency domain starting point as a starting point. This facilitates subsequent use of RO time-frequency resources to random access the base station.

In the example of the present disclosure, the first frequency domain starting point and the second frequency domain starting point are frequency offsets relative to a reference frequency domain starting point.

In some examples, the first RO time-frequency resource includes a first frequency domain starting point, and the second RO time-frequency resource includes a second frequency domain starting point. The UE locates a frequency domain position of the first RO time-frequency resource based on the first frequency domain starting point, and locates a frequency domain position of the second RO time-frequency resource based on the second frequency domain starting point.

In one example, the first RO time-frequency resource carries the eighth field, and the second RO time-frequency resource carries the ninth field; the eighth field is filled with a first frequency domain starting point (such as *Msg1-Frequency Start for SBFD*), and the ninth field is filled with a second frequency domain starting point (such as *Msg1-Frequency Start*). For example, the configuration of PRACH resources is shown in Figure 8a, in Figure 8a, RO00~RO02 represent the first PRACH resource, RO10~RO11 represent the second PRACH resource, and BW represents the reference frequency domain starting point. The frequency domain starting point of RO00~RO01 (that is, the first frequency domain starting point) is F1. Taking F1 as the starting point, RO00~RO01 is configured on a sub-frame 0 (first sub-frame); the frequency domain starting point of RO10~RO11 (that is, the second the frequency domain starting point) is F2. Taking F2 as the starting point, RO10~RO11 are configured on a sub-frame 3 (second sub-frame).

In some examples, the first RO time-frequency resource may include a frequency offset point of the first frequency domain starting point relative to the second frequency domain starting point, and the second RO time-frequency resource includes the second frequency domain starting point. The first UE calculates the sum of the frequency offset and the second frequency domain starting point, to obtain the first frequency domain starting point, and then locates the frequency domain position of the first RO time-frequency resource based on the first frequency domain starting point, locates the frequency domain location of the second RO time-frequency resource based on the second frequency domain starting point.

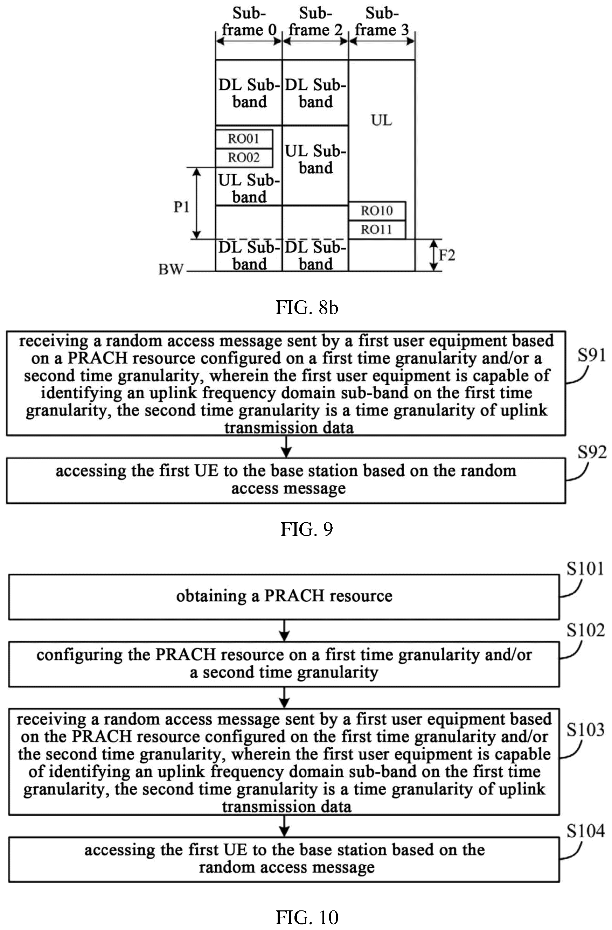

In one example, the second RO time-frequency resource carries the ninth field, and the first RO time-frequency resource carries the tenth field; the ninth field is filled with the second frequency domain starting point, and the tenth field is filled with a frequency offset of the first frequency domain starting point relative to the second frequency domain (such as *msg1-offset for SBFD*). For example, the configuration of PRACH resources is shown in Figure 8b, in Figure 8b, RO00~RO02 represent the first PRACH resource, RO10~RO11 represent the second PRACH resource, and BW represents the reference frequency domain starting point. The frequency domain starting point of RO10~RO11 (that is, the second frequency domain starting point) is F2. Taking F2 as the starting point, RO10~RO11 is configured on a sub-frame 4 (second sub-frame); P1 is the frequency offset of frequency domain starting point of RO00~RO01 relative to the frequency domain starting point of RO10~RO11, the first UE calculates the sum of F2 and P1, to obtain the frequency domain starting point of RO00~RO01 (i.e., the first frequency domain starting point) F1, and then configures RO00~RO01 on the sub-frame 1 (first sub-frame) by using F1 as the starting point .

In the example of the present disclosure, the first RO time-frequency resource and/or the second RO time-frequency resource may also indicate a reference frequency domain starting point. In one example, the first RO time-frequency resource carries an eleventh field; the eleventh field is to be filled with the reference frequency domain starting point. At this time, the first UE locates the first frequency domain starting point and the second frequency domain starting point based on the reference frequency domain starting point indicated by the first RO time-frequency resource and/or the second RO time-frequency resource.

If neither the first RO time-frequency resource nor the second RO time-frequency resource indicates the reference frequency domain starting point, the first UE may use the reference frequency domain starting point pre-negotiated with the base station.

In the example of the present disclosure, there is no limitation on information included in the first RO time-frequency resource and/or the second RO time-frequency resource.

In the example of the present disclosure, the preamble resource (such as the first preamble resource and the second preamble resource) may include the total number of preamble resources, the number of ROs corresponding to SSB, the number of preambles corresponding to one SSB, etc., to determine the number of preambles corresponding to one RO. Wherein, the base station can use signaling such as *totalNumberOfRA-Preambles*, *ssb-perRACH-OccasionAndCB-PreamblesPerSSB* to configure the number of preambles corresponding to one RO. In combination the number of resource blocks (RB) occupied by one preamble corresponding to the format of the preamble resource (preamble format for short), the number of ROs included in the frequency domain (the base station can use *msg1-FDM* signaling to configure the number of ROs included in the frequency domain), as well as the above-mentioned first frequency domain starting point and second frequency domain starting point, the first UE and the base station can determine the positions of the first RO time-frequency resource and the second RO time-frequency resource in the frequency domain.

In some examples, the first RO time-frequency resource indicates a first time domain position corresponding to the format of the first preamble resource, and the second RO time-frequency resource indicates a second time domain position corresponding to the format of the second preamble resource. The first UE configures the first PRACH resource on the first time granularity and/or the second time granularity according to the first time domain position indicated by the first RO time-frequency resource; configures the second PRACH resource on the first time granularity and/or the second time granularity according to the second time domain position indicated by the second RO time-frequency resource. This facilitates subsequent use of RO time-frequency resources to random access the base station.

In the example of the present disclosure, the time domain position corresponding to the preamble format may include the period for configuring PRACH time slots, a frame number for configuring a RO, a sub-frame number for configuring a RO, the number of PRACH time slots included in one sub-frame, the number of ROs included in one PRACH time slot, a starting symbol of a RO in one PRACH time slot, and the number of continuous symbols of the RO, as shown in Table 3. The PRACH configuration may further include other information, which is not limited.

**Table 3**

| | | | | | | | |
|---|---|---|---|---|---|---|---|
| Preamble Format | Period for configuring PRACH time slots | Frame number of configuring a PRACH | Sub-frame number of configuring a PRACH | the number of the PRACH time slots included in one sub-frame | the number of the ROs included in one PRACH time slot | Starting symbol of a RO in one PRACH time slot | the number of continuous symbols of a RO |

In some examples, a corresponding relationship between an index and a time domain position corresponding to a preamble format has been stored in the first UE; the first RO time-frequency resource carries a twelfth field, and the second RO time-frequency resource carries a thirteenth field, the twelfth field is filled with a first index of the first time domain position (such as *prach-ConfigurationIndex*); the thirteenth field is filled with a second index of the second time domain position (such as *prach-ConfigurationIndex*). In this case, the first UE queries the corresponding relationship between the index and the time domain position based on the first index and the second index, so as to obtain a first time domain position and a second time domain position, thereby configuring the RO. This reduces network overhead.

In some examples, the first RO time-frequency resource carries a fourteenth field, the second RO time-frequency resource carries a fifteenth field, the fourteenth field is filled with the first time domain position; the fifteenth field is filled with the second time domain position. The first UE can quickly obtain the first time domain position and the second time domain position from the first RO time-frequency resource and the second RO time-frequency resource, thereby improving RO configuration efficiency.

Corresponding to the above random access method applied to the first UE, an example of the present disclosure further provides a random access method, as shown in Figure 9, which is applied to the base station, wherein the method includes the following blocks.

Block S91: receiving a random access message sent by a first user equipment based on a PRACH resource configured on a first time granularity and/or a second time granularity, wherein the first user equipment is capable of identifying an uplink frequency domain sub-band on the first time granularity, the second time granularity is a time granularity of uplink transmission data;
Block S92: randomly accessing the first UE to the base station based on the random access message.

In the technical solution provided by the example of the present disclosure, the user equipment is capable of identifying the uplink frequency domain sub-band on the first time granularity, that is, the uplink time-frequency resource known to the user equipment further includes the uplink frequency domain sub-band configured in the first sub-frame (including down link time granularity and flexible time granularity), in addition to the second time granularity (i.e., the uplink time granularity). Based on this, the user equipment can comprehensively utilize the RO resource configured on the first sub-frame and the second frequency domain sub-band to send a random access message to the base station, so as to complete the random access. In this random access process, the uplink time-frequency resource for configuring the RO resource is increased, which greatly reduces the access latency when a large number of UEs access the network, avoids the problem of service interruption caused by excessive access latency, and meets the performance requirements for service continuity and improves user experience.

In some examples, as shown in Figure 10, the above random access method may include the following blocks.
Block S101, obtaining a PRACH resource;
Block S102, configuring the PRACH resource on a first time granularity and/or a second time granularity;
Block S103, receiving a random access message sent by a first user equipment based on the PRACH resource configured on a first time granularity and/or a second time granularity, wherein the first user equipment is capable of identifying an uplink frequency domain sub-band on the first time granularity, the second time granularity is a time granularity of uplink transmission data;
Block S104, randomly accessing the first UE to the base station based on the random access message.

In the technical solution provided by the example of the present disclosure, before receiving the random access message, the base station obtains a PRACH resource and configures the PRACH resource on the first time granularity and/or the second time granularity. The PRACH resource is configured based on resources of the current base station to ensure the accuracy of random access, thereby ensuring the access performance of a first UE.

In some examples, the PRACH resource includes a first PRACH resource corresponding to the first time granularity and a second PRACH resource corresponding to the second time granularity;
the above block S101 may include:
obtaining the first PRACH resource and the second PRACH resource, wherein the first PRACH resource includes a first random access channel occasion RO time-frequency resource, and the second PRACH resource includes a second RO time-frequency resource and a second preamble resource;
taking the second preamble resource as the first preamble resource, and adding the same to the first PRACH resource.

In some examples, the first PRACH resource corresponding to the first time granularity is not configured by the base station, the second PRACH resource corresponding to the second time granularity is configured by the base station, and the PRACH resource includes the second PRACH resource;
the above block S102 may include: configuring the second PRACH resource on the first target sub-frame, wherein the first target sub-frame includes a first sub-frame and a second sub-frame, or the first target sub-frame includes the second sub-frame.

In some examples, the above random access method may further include:
sending a first configuration signaling to the first user equipment, wherein the first configuration signaling is to indicate a first target time granularity.

In this case, the above block S102 may include: configuring the second PRACH resource on the first target time granularity indicated by the first configuration signaling.

In some examples, the first PRACH resource corresponding to the first time granularity and the second PRACH resource corresponding to the second time granularity are configured by the base station, and the PRACH resource includes the first PRACH resource and the second PRACH resource;
the above block S102 may include: configuring the first PRACH resource and the second PRACH resource on the first time granularity and the second time granularity.

In some examples, the above block S102 may include:
configuring the first PRACH resource on the second target time granularity, wherein the second target time granularity includes the first time granularity and the second time granularity, or the second target time granularity includes the first time granularity;
configuring the second PRACH resource on the first target time granularity, wherein the first target time granularity includes the first time granularity and the second time granularity, or the first target time granularity includes the second time granularity.

In some examples, the above random access method may further include:
sending a first configuration signaling to the first user equipment, wherein the first configuration signaling is to indicate the first target time granularity;
in this case, the above block S102 may include: configuring the second PRACH resource on the first target time granularity indicated by the first configuration signaling.

In some examples, the first configuration signaling carries a first field; the first field is filled with a first preset value, which indicates that the first target time granularity includes a first time granularity and a second time granularity; the first field is filled with a second preset value or not configured, which indicates that the first target time granularity includes the second time granularity.

In some examples, the first field has a bit width of 1.

In some examples, the above random access method may further include:
sending a first configuration signaling to the first user equipment, wherein the first configuration signaling is to indicate the second target time granularity;
in this case, the above block S102 may include: configuring the second PRACH resource on the second target time granularity indicated by the first configuration signaling.

In some examples, the first configuration signaling carries a second field; the second field is filled with a first preset value, which indicates that the second target time granularity includes a first time granularity and a second time granularity; the second field is filled with a second preset value or not configured, which indicates that the second target time granularity includes the first time granularity.

In some examples, the second field has a bit width of 1.

In some examples, the first PRACH resource includes a first RO time-frequency resource and a first preamble resource corresponding to the first RO time-frequency resource, and the second PRACH resource includes a second RO time-frequency resource and a second preamble resource corresponding to the second RO time-frequency resource;
if the first preamble resource is the same as or partially overlaps with the second preamble resource, and the first RO time-frequency resource is the same as or partially overlaps with the second RO time-frequency resource, configuring the first PRACH resource and the second PRACH resource on the first time granularity and the second time granularity includes:
configuring the first PRACH resource on the first time granularity, and configuring the second PRACH resource on the second time granularity.

In some examples, the first PRACH resource includes a first RO time-frequency resource and a first preamble resource corresponding to the first RO time-frequency resource, and the second PRACH resource includes a second RO time-frequency resource and a second preamble resource corresponding to the second RO time-frequency resource;
if the first preamble resource is the same as or partially overlaps with the second preamble resource, and the first RO time-frequency resource partially overlaps with the second RO time-frequency resource, configuring the first PRACH resource and the second PRACH resource on the first time granularity and the second time granularity includes:
configuring the first PRACH resource on the first time granularity and the second time granularity, configuring the second PRACH resource on the first time granularity and/or the second time granularity, and invalidating a third RO time-frequency resource in the first RO time-frequency resource, wherein the third RO time-frequency resource is a portion where the first RO time-frequency resource overlaps with the second RO time-frequency resource.

In some examples, the first PRACH resource includes a first RO time-frequency resource, a first preamble resource and a second preamble resource corresponding to the first RO time-frequency resource, and the second PRACH resource includes a second RO time-frequency resource and a second preamble resource corresponding to the second RO time-frequency resource;
configuring the first PRACH resource and the second PRACH resource on the first time granularity and the second time granularity includes:
configuring the first preamble resource and the second preamble resource on the first time granularity and the second time granularity; or
configuring the first preamble resource on the first time granularity and the second time granularity, and configuring the second preamble resource on the second time granularity; or
configuring the first preamble resource on the first time granularity, and configuring the second preamble resource on the first time granularity and the second time granularity; or
configuring the first preamble resource on the first time granularity, and configuring the second preamble resource and the first preamble resource on the second time granularity.

In some examples, the first PRACH resource includes a first RO time-frequency resource, a second RO time-frequency resource, and a first preamble resource corresponding to the first RO time-frequency resource and the second RO time-frequency resource, wherein the second PRACH resource includes a second RO time-frequency resource and a second preamble resource corresponding to the second RO time-frequency resource;
configuring the first PRACH resource and the second PRACH resource on the first time granularity and the second time granularity includes:
configuring the first RO time-frequency resource and the second RO time-frequency resource on the first time granularity and the second time granularity; or
configuring the first RO time-frequency resource on the first time granularity and the second time granularity, and configuring the second RO time-frequency resource on the second time granularity; or
configuring the first RO time-frequency resource at the first time granularity, and configuring the second RO time-frequency resource on the first time granularity and the second time granularity; or
configuring the first RO time-frequency resource on the first time granularity, and configuring the second RO time-frequency resource and the first preamble resource on the second time granularity.

In some examples, the above-mentioned block S92 or block S104 may include: receiving a random access message sent by the first user equipment by using a PRACH resource configured on a third target time granularity, wherein the third target time granularity includes the first time granularity and the second time granularity, or, the third target time granularity includes the first time granularity.

In some examples, the above random access method may also include:
sending a second configuration signaling to the first user equipment, wherein the second configuration signaling is to indicate the third target time granularity;
in this case, the above block S92 or block S104 may include:
   receiving the random access message sent by the first user equipment by using the PRACH resource configured on the third target time granularity indicated by the second configuration signaling.

In some examples, the second configuration signaling carries a third field; the third field is filled with a first preset value, which indicates that the third target time granularity includes the first time granularity; the third field is filled with a second preset value or is not configured, which indicates that the third target time granularity includes the first time granularity and the second time granularity.

In some examples, the third field has a bit width of 1.

In some examples, the above block S92 or block S104 may include:
receiving the random access message sent by the first user equipment by using a first target PRACH resource and/or a second target PRACH resource configured on the third target time granularity, wherein the first target PRACH resource is an available target PRACH resource on the first time granularity, the second target PRACH resource is an available target PRACH resource on the second time granularity.

In some examples, the above random access method may also include:
sending a second configuration signaling to the first user equipment, wherein the second configuration signaling is to indicate a target PRACH resource, and the target PRACH resource includes the first target PRACH resource and/or the second target PRACH resource;
in this case, the above block S92 or block S104 may include:
   receiving the random access message sent by the first user equipment by using the target PRACH resource indicated by the second configuration signaling configured on the third target time granularity.

In some examples, the second configuration signaling carries a fourth field and/or a fifth field; the fourth field is filled with a third preset value, which indicates that the second target PRACH resource includes the first PRACH resource corresponding to the first time granularity; the fourth field is filled with a fourth preset value, which indicates that the second target PRACH resource includes the second PRACH resource corresponding to the second time granularity; the fourth field is filled with a fifth preset value, which indicates that the second target PRACH resource includes the first PRACH resource and the second PRACH resource;
the fifth field is filled with the third preset value, which indicates that the first target PRACH resource includes the first PRACH resource; the fifth field is filled with the fourth preset value, which indicates that the first target PRACH resource includes the second PRACH resource; the fifth field is filled with the fifth preset value, which indicates that the first target PRACH resource includes the first PRACH resource and the second PRACH resource.

In some examples, the bit widths of the fourth field and the fifth field are 2 respectively.

In some examples, the PRACH resource includes a first PRACH resource corresponding to the first time granularity and a second PRACH resource corresponding to the second time granularity; the first PRACH resource includes a first RO time-frequency resource and a first preamble resource and a second preamble resource corresponding to the first RO time-frequency resource, the second PRACH resource includes a second RO time-frequency resource and a second preamble resource corresponding to the second RO time-frequency resource;
in this case, the above block S82 or block S94 may include: receiving the random access message sent by the first user equipment by using a target preamble resource configured on the first time granularity and/or the second time granularity, wherein the target preamble resource includes a first preamble resource and a second preamble resource, or the target preamble resource includes a first preamble resource.

In some examples, the above random access method may further include:
sending a second configuration signaling to the first user equipment, wherein the second configuration signaling is to indicate the target preamble resource;
receiving the random access message sent by the first user equipment by using the target preamble resource configured on the first time granularity and/or the second time granularity may include: receiving the random access message sent by the first user equipment by using the target preamble resource indicated by the second configuration signaling configured on the first time granularity and/or the second time granularity.

In some examples, the second configuration signaling carries a sixth field; the sixth field is filled with a first preset value, which indicates that the target preamble resource includes the first preamble resource; the sixth field is filled with a second preset value or is not configured, which indicates that the target preamble resource includes a first preamble resource and a second preamble resource.

In some examples, the sixth field has a bit width of 1.

In some examples, the PRACH resource includes a first PRACH resource corresponding to the first time granularity and a second PRACH resource corresponding to the second time granularity; the first PRACH resource includes a first RO time-frequency resource, a second RO time-frequency resource, and a first preamble resource corresponding to the first RO time-frequency resource and the second RO time-frequency resource, and the second PRACH resource includes a second RO time-frequency resource and a second preamble resource corresponding to the second RO time-frequency resource;
The above-mentioned block S92 or block S104 may include:
receiving the random access message sent by the first user equipment by using a target RO time-frequency resource configured on the first time granularity and/or the second time granularity, wherein the target RO time-frequency resource includes a first RO time-frequency resource and a second RO time-frequency resource, or the target RO time-frequency resource includes the first RO time-frequency resource.

In some examples, the above random access method may further include:
sending a second configuration signaling to the first user equipment, wherein the second configuration signaling is to indicate the target RO time-frequency resource;
wherein receiving the random access message sent by the first user equipment by using the target RO time-frequency resource configured on the first time granularity and/or the second time granularity includes: receiving the random access message sent by the first user equipment by using the target RO time-frequency resource indicated by the second configuration signaling configured on the first time granularity and/or the second time granularity.

In some examples, the second configuration signaling carries a seventh field; the seventh field is filled with a first preset value, which indicates that the target RO time-frequency resource includes the first RO time-frequency resource; the seventh field is filled with a second preset value or is not configured, which indicates that the target RO time-frequency resource includes a first RO time-frequency resource and a second RO time-frequency resource.

In some examples, the seventh field has a bit width of 1.

In some examples, the PRACH resource includes a first PRACH resource corresponding to the first time granularity and a second PRACH resource corresponding to the second time granularity; the first PRACH resource includes a first RO time-frequency resource and a first preamble resource corresponding to the first RO time-frequency resource, and the second PRACH resource includes a second RO time-frequency resource and a second preamble resource corresponding to the second RO time-frequency resource;
the above block S102 may include: configuring the first PRACH resource on the first time granularity and/or the second time granularity by taking a first frequency domain starting point indicated by the first RO time-frequency resource as a starting point; configuring the second PRACH resource on the first time granularity and/or the second time granularity by taking a second frequency domain starting point indicated by the second RO time-frequency resource as a starting point.

In some examples, the first RO time-frequency resource carries an eighth field, and the second RO time-frequency resource carries a ninth field; the eighth field is filled with the first frequency domain starting point, and the ninth field is filled with the second frequency domain starting point; or,
the second RO time-frequency resource carries the ninth field, and the first RO time-frequency resource carries a tenth field; the ninth field is filled with the second frequency domain starting point, and the tenth field is filled with a frequency offset of the first frequency domain starting point relative to the second frequency domain starting point.

In some examples, the first RO time-frequency resource and/or the second RO time-frequency resource carries an eleventh field; the eleventh field is to be filled with a reference frequency domain starting point.

In some examples, the PRACH resource includes a first PRACH resource corresponding to the first time granularity and a second PRACH resource corresponding to the second time granularity; the first PRACH resource includes a first RO time-frequency resource and a first preamble resource corresponding to the first RO time-frequency resource, the second PRACH resource includes a second RO time-frequency resource and a second preamble resource corresponding to the second RO time-frequency resource;
wherein configuring the PRACH resource on the first time granularity and/or the second time granularity includes:
configuring the first PRACH resource on the first time granularity and/or the second time granularity according to a first time domain position corresponding to a format of the first preamble resource indicated by the first RO time-frequency resource; configuring the second PRACH resource on the first time granularity and/or the second time granularity according to a second time domain position corresponding to a format of the second preamble resource indicated by the second RO time-frequency resource.

In some examples, a corresponding relationship between an index and a time domain position corresponding to a preamble format has been stored in the first UE; the first RO time-frequency resource carries a twelfth field, and the second RO time-frequency resource carries a thirteenth field, the twelfth field is filled with a first index of the first time domain position; the thirteenth field is filled with a second index of the second time domain position; or,
the first RO time-frequency resource carries a fourteenth field, and the second RO time-frequency resource carries a fifteenth field, wherein the fourteenth field is filled with the first time domain position; the fifteenth field is filled with the second time domain position.

In some examples, the time granularity is a sub-frame, a time slot, or a symbol.

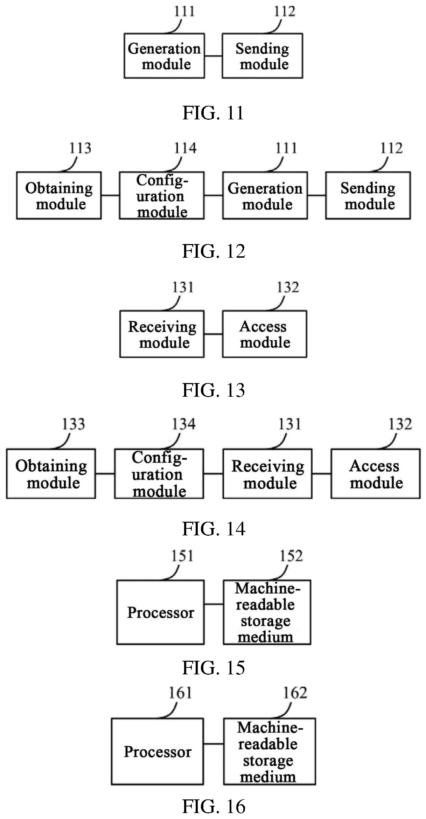

Corresponding to the above random access method applied to the first UE, an example of the present disclosure further provides a random access apparatus, as shown in Figure 11, which is applied to the first UE, the first user equipment is capable of identifying an uplink frequency domain sub-band on a first time granularity, wherein the apparatus includes:
a generation module 111, to generate a random access message;
a sending module 112, to send the random access message to a base station based on a PRACH resource configured on the first time granularity and/or a second time granularity, wherein the second time granularity is a time granularity of uplink transmission data.

In the technical solution provided by the example of the present disclosure, the user equipment is capable of identifying the uplink frequency domain sub-band on the first time granularity, that is, the uplink time-frequency resource known to the user equipment further includes the uplink frequency domain sub-band configured in the first sub-frame (including down link time granularity and flexible time granularity), in addition to the second time granularity (i.e., the uplink time granularity). Based on this, the user equipment can comprehensively utilize the PRACH resource configured on the first sub-frame and the second frequency domain sub-band to send a random access message to the base station, so as to complete the random access. In this random access process, the uplink time-frequency resource configured on the PRACH resource is increased, which greatly reduces the access latency when a large number of UEs access the network, avoids the problem of service interruption caused by excessive access latency, and meets the performance requirements for service continuity and improves user experience.

In some examples, as shown in Figure 12, the above random access apparatus may further include:
an obtaining module 113, to obtain the PRACH resource from the base station before generating a random access message;
a configuration module 114, to configure the PRACH resource on the first time granularity and/or the second time granularity.

In the technical solution provided by the example of the present disclosure, before generating a random access message, a first UE obtains a PRACH resource from a base station and configures the PRACH resource on the first time granularity and/or the second time granularity. The PRACH resource is configured based on resources of the current base station to ensure the accuracy of random access, thereby ensuring the access performance of the first UE.

In some examples, the PRACH resource includes a first PRACH resource corresponding to a first time granularity and a second PRACH resource corresponding to a second time granularity;
the obtaining module 113 is specifically to:
obtain the first PRACH resource and the second PRACH resource from the base station, wherein the first PRACH resource includes a first random access channel occasion RO time-frequency resource, and the second PRACH resource includes a second RO time-frequency resource and a second preamble resource;
take the second preamble resource as the first preamble resource and add the same to the first PRACH resource.

In some examples, the first PRACH resource corresponding to the first time granularity is not configured by the base station, the second PRACH resource corresponding to the second time granularity is configured by the base station, and the PRACH resource includes the second PRACH resource;
the configuration module 114 is specifically to:
configure the second PRACH resource on the first target time granularity, wherein the first target time granularity includes the first time granularity and the second time granularity, or the first target time granularity includes the second time granularity.

In some examples, the above random access apparatus may further include:
a receiving module, to receive a first configuration signaling sent by the base station, wherein the first configuration signaling is to indicate the first target time granularity;
the configuration module 114, specifically to configure the second PRACH resource on the first target time granularity indicated by the first configuration signaling.

In some examples, a first PRACH resource corresponding to the first time granularity and a second PRACH resource corresponding to the second time granularity are configured by the base station, and the PRACH resource includes the first PRACH resource and the second PRACH resource;
the configuration module 114 is specifically to configure the first PRACH resource and the second PRACH resource on the first time granularity and the second time granularity.

In some examples, the configuration module 114 is specifically to:
configure the first PRACH resource on a second target time granularity, wherein the second target time granularity includes the first time granularity and the second time granularity, or the second target time granularity includes the first time granularity;
configure the second PRACH resource on a first target time granularity, wherein the first target time granularity includes the first time granularity and the second time granularity, or the first target time granularity includes the second time granularity.

In some examples, the above random access apparatus may further include:
a receiving module, to receive a first configuration signaling sent by the base station, wherein the first configuration signaling is to indicate the first target time granularity;
the configuration module 114, specifically to configure the second PRACH resource on the first time granularity indicated by the first configuration signaling.

In some examples, the first configuration signaling carries a first field; the first field is filled with a first preset value, which indicates that the first target time granularity includes the first time granularity and the second time granularity; the first field is filled with a second preset value or not configured, which indicates that the first target time granularity includes the second time granularity.

In some examples, the first field has a bit width of 1.

In some examples, the above random access apparatus may further include:
a receiving module, to receive a first configuration signaling sent by the base station, wherein the first configuration signaling is to indicate a second target time granularity;
the configuration module 114, specifically to configure the second PRACH resource on the second time granularity indicated by the first configuration signaling.

In some examples, the first configuration signaling carries a second field; the second field is filled with a first preset value, which indicates that the second target time granularity includes the first time granularity and the second time granularity; the second field is filled with a second preset value or not configured, which indicates that the second target time granularity includes the first time granularity.

In some examples, the second field has a bit width of 1.

In some examples, the first PRACH resource includes a first RO time-frequency resource and a first preamble resource corresponding to the first RO time-frequency resource, and the second PRACH resource includes a second RO time-frequency resource and a preamble resource corresponding to the second RO time-frequency resource;
the configuration module 114 is specifically to: if the first preamble resource is the same as or partially overlaps with the second preamble resource, and the first RO time-frequency resource is the same as or partially overlaps with the second RO time-frequency resource, then configure the first PRACH resource on the first time granularity, and configure the second PRACH resource on the second time granularity.

In some examples, the first PRACH resource includes a first RO time-frequency resource and a first preamble resource corresponding to the first RO time-frequency resource, and the second PRACH resource includes a second RO time-frequency resource and a second preamble resource corresponding to the second RO time-frequency resource;
the configuration module 114 is specifically to: if the first preamble resource is the same as or partially overlaps with the second preamble resource, and the first RO time-frequency resource partially overlaps with the second RO time-frequency resource, configure the first PRACH resource on the first time granularity and the second time granularity, configure the second PRACH resource on the first time granularity and/or the second time granularity, and invalidate a third RO time-frequency resource in the first RO time-frequency resource, wherein the third RO time-frequency resource is a portion where the first RO time-frequency resource overlaps with the second RO time-frequency resource.

In some examples, the first PRACH resource includes a first RO time-frequency resource, a first preamble resource and a second preamble resource corresponding to the first RO time-frequency resource, and the second PRACH resource includes a second RO time-frequency resource and a second preamble resource corresponding to the second RO time-frequency resource;
the configuration module 114 is specifically to:
configure the first preamble resource and the second preamble resource on the first time granularity and the second time granularity; or
configure the first preamble resource on the first time granularity and the second time granularity, and configure the second preamble resource on the second time granularity; or
configure the first preamble resource on the first time granularity, and configure the second preamble resource on the first time granularity and the second time granularity; or
configure the first preamble resource on the first time granularity, and configure the second preamble resource and the first preamble resource on the second time granularity.

In some examples, the first PRACH resource includes a first RO time-frequency resource, a second RO time-frequency resource, and a first preamble resource corresponding to the first RO time-frequency resource and the second RO time-frequency resource, wherein the second PRACH resource includes a second RO time-frequency resource and a second preamble resource corresponding to the second RO time-frequency resource;
the configuration module 114 is specifically to:
configure the first RO time-frequency resource and the second RO time-frequency resource on the first time granularity and the second time granularity; or
configure the first RO time-frequency resource on the first time granularity and the second time granularity, and configure the second RO time-frequency resource on the second time granularity; or
configure the first RO time-frequency resource on the first time granularity, and configure the second RO time-frequency resource on the first time granularity and the second time granularity; or
configure the first RO time-frequency resource on the first time granularity, and configure the second RO time-frequency resource and the first preamble resource on the second time granularity.

In some examples, the sending module 112 is specifically to send the random access message to the base station by using a PRACH resource configured on a third target time granularity, wherein the third target time granularity includes the first time granularity and the second time granularity, or, the third target time granularity includes the first time granularity.

In some examples, the above random access apparatus may further include:
the receiving module, to receive a second configuration signaling sent by the base station, and the second configuration signaling is to indicate the third target time granularity;
the sending module, specifically to send the random access message to the base station by using the PRACH resource configured on the third target time granularity indicated by the second configuration signaling.

In some examples, the second configuration signaling carries a third field; the third field is filled with a first preset value, which indicates that the third target time granularity includes the first time granularity; the third field is filled with a second preset value or is not configured, which indicates that the third target time granularity includes the first time granularity and the second time granularity.

In some examples, the third field has a bit width of 1.

In some examples, the sending module 112 is specifically to send the random access message to the base station by using a first target PRACH resource and/or a second target PRACH resource configured on the third target time granularity, wherein the first target PRACH resource is an available target PRACH resource on the first time granularity, the second target PRACH resource is an available target PRACH resource on the second time granularity.

In some examples, the above random access apparatus may further include:
the receiving module, to receive a second configuration signaling sent by the base station, wherein the second configuration signaling is to indicate a target PRACH resource, and the target PRACH resource includes the first target PRACH resource and/or the second target PRACH resource;
the sending module 112, specifically to send the random access message to the base station by using the target PRACH resource configured on the third target time granularity indicated by the second configuration signaling.

In some examples, the second configuration signaling carries a fourth field and/or a fifth field;
the fourth field is filled with a third preset value, which indicates that the second target PRACH resource includes the first PRACH resource corresponding to the first time granularity; the fourth field is filled with a fourth preset value, which indicates that the second target PRACH resource includes the second PRACH resource corresponding to the second time granularity; the fourth field is filled with a fifth preset value, which indicates that the second target PRACH resource includes the first PRACH resource and the second PRACH resource;
the fifth field is filled with the third preset value, which indicates that the first target PRACH resource includes the first PRACH resource; the fifth field is filled with the fourth preset value, which indicates that the first target PRACH resource includes the second PRACH resource; the fifth field is filled with the fifth preset value, which indicates that the first target PRACH resource includes the first PRACH resource and the second PRACH resource.

In some examples, the bit widths of the fourth field and the fifth field are 2 respectively.

In some examples, the PRACH resource includes a first PRACH resource corresponding to the first time granularity and a second PRACH resource corresponding to the second time granularity; the first PRACH resource includes a first RO time-frequency resource and a first preamble resource and a second preamble resource corresponding to the first RO time-frequency resource, the second PRACH resource includes a second RO time-frequency resource and the second preamble resource corresponding to the second RO time-frequency resource;
the sending module 112, to send a random access message to the base station by using the target preamble resource configured on the first time granularity and/or the second time granularity, wherein the target preamble resource includes a first preamble resource and a second preamble resource, or the target preamble resource includes a first preamble resource.

In some examples, the above random access apparatus may further include:
the receiving module, to receive the second configuration signaling sent by the base station, and the second configuration signaling is to indicate the target preamble resource;
the sending module 112, specifically to send the random access message to the base station by using the target preamble resource configured on the first time granularity and/or the second time granularity indicated by the second configuration signaling.

In some examples, the second configuration signaling carries a sixth field; the sixth field is filled with a first preset value, which indicates that the target preamble resource includes the first preamble resource; the sixth field is filled with a second preset value or is not configured, which indicates that the target preamble resource includes a first preamble resource and a second preamble resource.

In some examples, the sixth field has a bit width of 1.

In some examples, the PRACH resource includes a first PRACH resource corresponding to the first time granularity and a second PRACH resource corresponding to the second time granularity; the first PRACH resource includes a first RO time-frequency resource, a second RO time-frequency resource, and a first preamble resource corresponding to the first RO time-frequency resource and the second RO time-frequency resource, and the second PRACH resource includes the second RO time-frequency resource and a second preamble resource corresponding to the second RO time-frequency resource;
the sending module 112, to send the random access message to the base station by using a target RO time-frequency resource configured on the first time granularity and/or the second time granularity, wherein the target RO time-frequency resource includes a first RO time-frequency resource and a second RO time-frequency resource, or the target RO time-frequency resource includes the first RO time-frequency resource.

In some examples, the above random access apparatus may further include:
the receiving module, to receive the second configuration signaling sent by the base station, wherein the second configuration signaling is to indicate the target RO time-frequency resource;
the sending module 112, specifically to send the random access message to the base station by using the target RO time-frequency resource configured on the first time granularity and/or the second time granularity indicated by the second configuration signaling.

In some examples, the second configuration signaling carries a seventh field; the seventh field is filled with a first preset value, which indicates that the target RO time-frequency resource includes the first RO time-frequency resource; the seventh field is filled with a second preset value or is not configured, which indicates that the target RO time-frequency resource includes the first RO time-frequency resource and the second RO time-frequency resource.

In some examples, the seventh field has a bit width of 1.

In some examples, the PRACH resource includes a first PRACH resource corresponding to the first time granularity and a second PRACH resource corresponding to the second time granularity; the first PRACH resource includes a first RO time-frequency resource and a first preamble resource corresponding to the first RO time-frequency resource, and the second PRACH resource includes a second RO time-frequency resource and a second preamble resource corresponding to the second RO time-frequency resource;
the configuration module 114 is specifically to: configure the first PRACH resource on the first time granularity and/or the second time granularity by taking a first frequency domain starting point indicated by the first RO time-frequency resource as a starting point; configure the second PRACH resource on the first time granularity and/or the second time granularity by taking a second frequency domain starting point indicated by the second RO time-frequency resource as a starting point.

In some examples, the first RO time-frequency resource carries an eighth field, and the second RO time-frequency resource carries a ninth field; the eighth field is filled with the first frequency domain starting point, and the ninth field is filled with the second frequency domain starting point; or,
the second RO time-frequency resource carries the ninth field, and the first RO time-frequency resource carries a tenth field; the ninth field is filled with the second frequency domain starting point, and the tenth field is filled with an frequency offset of the first frequency domain starting point relative to the second frequency domain starting point.

In some examples, the first RO time-frequency resource and/or the second RO time-frequency resource carries an eleventh field; the eleventh field is to be filled with a reference frequency domain starting point.

In some examples, the PRACH resource includes a first PRACH resource corresponding to the first time granularity and a second PRACH resource corresponding to the second time granularity; the first PRACH resource includes a first RO time-frequency resource and a first preamble resource corresponding to the first RO time-frequency resource, the second PRACH resource includes a second RO time-frequency resource and a second preamble resource corresponding to the second RO time-frequency resource;
the configuration module 114 is specifically to: configure the first PRACH resource on the first time granularity and/or the second time granularity according to a first time domain position corresponding to a format of the first preamble resource indicated by the first RO time-frequency resource; configure the second PRACH resource on the first time granularity and/or the second time granularity according to a second time domain position corresponding to a format of the second preamble resource indicated by the second RO time-frequency resource.

In some examples, a corresponding relationship between an index and a time domain position corresponding to a preamble format has been stored in the first UE; the first RO time-frequency resource carries a twelfth field, and the second RO time-frequency resource carries a thirteenth field, the twelfth field is filled with a first index of the first time domain position; the thirteenth field is filled with a second index of the second time domain position; or,
the first RO time-frequency resource carries a fourteenth field, and the second RO time-frequency resource carries a fifteenth field, wherein the fourteenth field is filled with the first time domain position; the fifteenth field is filled with the second time domain position.

In some examples, the time granularity is a sub-frame, a time slot, or a symbol.

Corresponding to the above random access method applied to the base station, an example of the present disclosure further provides a random access apparatus, as shown in Figure 13, which is applied to the base station, wherein the apparatus includes:
a receiving module 131, to receive a random access message sent by a first user equipment based on a PRACH resource configured on a first time granularity and/or a second time granularity, wherein the first user equipment is capable of identifying an uplink frequency domain sub-band on the first time granularity, the second time granularity is a time granularity of uplink transmission data;
an access module 132, to randomly access the first user equipment to the base station based on the random access message.

In the technical solution provided by the example of the present disclosure, the user equipment is capable of identifying the uplink frequency domain sub-band on the first time granularity, that is, the uplink time-frequency resource known to the user equipment further includes the uplink frequency domain sub-band configured in the first sub-frame (including down link time granularity and flexible time granularity), in addition to the second time granularity (i.e., the uplink time granularity). Based on this, the user equipment can comprehensively utilize the PRACH resource configured on the first sub-frame and the second frequency domain sub-band to send a random access message to the base station, so as to complete the random access. In this random access process, the uplink time-frequency resource configured on the PRACH resource is increased, which greatly reduces the access latency when a large number of UEs access the network, avoids the problem of service interruption caused by excessive access latency, and meets the performance requirements for service continuity and improves user experience.

In some examples, as shown in Figure 14, the above random access apparatus may further include:
an obtaining module 133, to obtain the PRACH resource before receiving the random access message sent by the first user equipment;
a configuration module 134, to configure the PRACH resource on the first time granularity and/or the second time granularity.

In the technical solution provided by the example of the present disclosure, before generating a random access message, a first UE obtains a PRACH resource from a base station and configures the PRACH resource on the first time granularity and/or the second time granularity. The PRACH resource is configured based on resources of the current base station to ensure the accuracy of random access, thereby ensuring the access performance of the first UE.

In some examples, the PRACH resource includes a first PRACH resource corresponding to a first time granularity and a second PRACH resource corresponding to a second time granularity;
the obtaining module 133 is specifically to:
obtain the first PRACH resource and the second PRACH resource, wherein the first PRACH resource includes a first random access channel occasion RO time-frequency resource, and the second PRACH resource includes a second RO time-frequency resource and a second preamble resource;
take the second preamble resource as the first preamble resource, and add the same to the first PRACH resource.

In some examples, the first PRACH resource corresponding to the first time granularity is not configured by the base station, the second PRACH resource corresponding to the second time granularity is configured by the base station, and the PRACH resource includes the second PRACH resource;
the configuration module 134 is specifically to configure the second PRACH resource on the first target time granularity, wherein the first target time granularity includes the first time granularity and the second time granularity, or the first target time granularity includes the second time granularity.

In some examples, the above random access apparatus may further include:
an issuing module, to send a first configuration signaling to the first user equipment, wherein the first configuration signaling is to indicate the first target time granularity;
the configuration module 134, specifically to configure the second PRACH resource on the first target time granularity indicated by the first configuration signaling.

In some examples, the first PRACH resource corresponding to the first time granularity and the second PRACH resource corresponding to the second time granularity are configured by the base station, and the PRACH resource includes the first PRACH resource and the second PRACH resource;
the configuration module 134 is specifically to configure the first PRACH resource and the second PRACH resource on the first time granularity and the second time granularity.

In some examples, the configuration module 134 is specifically to:
configure the first PRACH resource on a second target time granularity, wherein the second target time granularity includes the first time granularity and the second time granularity, or the second target time granularity includes the first time granularity;
configure the second PRACH resource on the first target time granularity, wherein the first target time granularity includes the first time granularity and the second time granularity, or the first target time granularity includes the second time granularity.

In some examples, the above random access apparatus may further include:
an issuing module, to send a first configuration signaling to the first user equipment, wherein the first configuration signaling is to indicate the first target time granularity;
the configuration module 134, specifically to configure the second PRACH resource on the first target time granularity indicated by the first configuration signaling.

In some examples, the first configuration signaling carries a first field; the first field is filled with a first preset value, which indicates that the first target time granularity includes a first time granularity and a second time granularity; the first field is filled with a second preset value or not configured, which indicates that the first target time granularity includes the second time granularity.

In some examples, the first field has a bit width of 1.

In some examples, the above random access apparatus may further include:
an issuing module, to send a first configuration signaling to the first user equipment, wherein the first configuration signaling is to indicate a second target time granularity;
the configuration module 134, specifically to configure the second PRACH resource on the second target time granularity indicated by the first configuration signaling.

In some examples, the first configuration signaling carries a second field; the second field is filled with a first preset value, which indicates that the second target time granularity includes a first time granularity and a second time granularity; the second field is filled with a second preset value or not configured, which indicates that the second target time granularity includes the first time granularity.

In some examples, the second field has a bit width of 1.

In some examples, the first PRACH resource includes a first RO time-frequency resource and a first preamble resource corresponding to the first RO time-frequency resource, and the second PRACH resource includes a second RO time-frequency resource and a second preamble resource corresponding to the second RO time-frequency resource;
the configuration module 134 is specifically to: if the first preamble resource is the same as or partially overlaps with the second preamble resource, and the first RO time-frequency resource is the same as or partially overlaps with the second RO time-frequency resource, then configure the first PRACH resource on the first time granularity, and configure the second PRACH resource on the second time granularity.

In some examples, the first PRACH resource includes a first RO time-frequency resource and a first preamble resource corresponding to the first RO time-frequency resource, and the second PRACH resource includes a second RO time-frequency resource and a second preamble resource corresponding to the second RO time-frequency resource;
the configuration module 134 is specifically to: if the first preamble resource is the same as or partially overlaps with the second preamble resource, and the first RO time-frequency resource partially overlaps with the second RO time-frequency resource, configure the first PRACH resource on the first time granularity and the second time granularity, configuring the second PRACH resource on the first time granularity and/or the second time granularity, and invalidate a third RO time-frequency resource in the first RO time-frequency resource, wherein the third RO time-frequency resource is a portion where the first RO time-frequency resource overlaps with the second RO time-frequency resource.

In some examples, the first PRACH resource includes a first RO time-frequency resource, a first preamble resource corresponding to the first RO time-frequency resource and a second preamble resource, and the second PRACH resource includes a second RO time-frequency resource and a second preamble resource corresponding to the second RO time-frequency resource;
the configuration module 134 is specifically to:
configure the first preamble resource and the second preamble resource on the first time granularity and the second time granularity; or
configure the first preamble resource on the first time granularity and the second time granularity, and configure the second preamble resource on the second time granularity; or
configure the first preamble resource on the first time granularity, and configure the second preamble resource on the first time granularity and the second time granularity; or
configure the first preamble resource on the first time granularity, and configure the second preamble resource and the first preamble resource on the second time granularity.

In some examples, the first PRACH resource includes a first RO time-frequency resource, a second RO time-frequency resource, and a first preamble resource corresponding to the first RO time-frequency resource and the second RO time-frequency resource, wherein the second PRACH resource includes a second RO time-frequency resource and a second preamble resource corresponding to the second RO time-frequency resource;
the configuration module 134 is specifically to:
configure the first RO time-frequency resource and the second RO time-frequency resource on the first time granularity and the second time granularity; or
configure the first RO time-frequency resource on the first time granularity and the second time granularity, and configure the second RO time-frequency resource on the second time granularity; or
configure the first RO time-frequency resource on the first time granularity, and configure the second RO time-frequency resource on the first time granularity and the second time granularity; or
configure the first RO time-frequency resource on the first time granularity, and configure the second RO time-frequency resource and the first preamble resource on the second time granularity.

In some examples, the receiving module 131 is specifically to receive a random access message sent by the first user equipment by using a PRACH resource configured on a third target time granularity, wherein the third target time granularity includes the first time granularity and the second time granularity, or, the third target time granularity includes the first time granularity.

In some examples, the above random access apparatus may further include:
an issuing module, to send a second configuration signaling to the first user equipment, wherein the second configuration signaling is to indicate the third target time granularity;
the receiving module 131, specifically to receive the random access message sent by the first user equipment by using the PRACH resource configured on the third target time granularity indicated by the second configuration signaling.

In some examples, the second configuration signaling carries a third field; the third field is filled with a first preset value, which indicates that the third target time granularity includes the first time granularity; the third field is filled with a second preset value or is not configured, which indicates that the third target time granularity includes the first time granularity and the second time granularity.

In some examples, the third field has a bit width of 1.

In some examples, the receiving module 131 is specifically to receive the random access message sent by the first user equipment by using the first target PRACH resource and/or the second target PRACH resource configured on the third target time granularity, wherein the first target PRACH resource is an available target PRACH resource on the first time granularity, the second target PRACH resource is an available target PRACH resource on the second time granularity.

In some examples, the above random access apparatus may further include:
an issuing module, to send a second configuration signaling to the first user equipment, wherein the second configuration signaling is to indicate a target PRACH resource, and the target PRACH resource includes a first target PRACH resource and/or a second target PRACH resource;
the receiving module 131, specifically to receive the random access message sent by the first user equipment by using the target PRACH resource configured on the third target time granularity indicated by the second configuration signaling.

In some examples, the second configuration signaling carries the fourth field and/or the fifth field;
the fourth field is filled with a third preset value, which indicates that the second target PRACH resource includes the first PRACH resource corresponding to the first time granularity; the fourth field is filled with a fourth preset value, which indicates that the second target PRACH resource includes the second PRACH resource corresponding to the second time granularity; the fourth field is filled with a fifth preset value, which indicates that the second target PRACH resource includes the first PRACH resource and the second PRACH resource;
the fifth field is filled with the third preset value, which indicates that the first target PRACH resource includes the first PRACH resource; the fifth field is filled with the fourth preset value, which indicates that the first target PRACH resource includes the second PRACH resource; the fifth field is filled with the fifth preset value, which indicates that the first target PRACH resource includes the first PRACH resource and the second PRACH resource.

In some examples, the bit widths of the fourth field and the fifth field are 2 respectively.

In some examples, the PRACH resource includes a first PRACH resource corresponding to the first time granularity and a second PRACH resource corresponding to the second time granularity; the first PRACH resource includes a first RO time-frequency resource and a first preamble resource and a second preamble resource corresponding to the first RO time-frequency resource, the second PRACH resource includes a second RO time-frequency resource and a second preamble resource corresponding to the second RO time-frequency resource;
the receiving module 131 is specifically to receive the random access message sent by the first user equipment by using the target preamble resource configured on the first time granularity and/or the second time granularity, wherein the target preamble resource includes a first preamble resource and a second preamble resource, or the target preamble resource includes a first preamble resource.

In some examples, the above random access apparatus may further include:
an issuing module, to send a second configuration signaling to the first user equipment, wherein the second configuration signaling is to indicate the target preamble resource;
the receiving module 131, specifically to receive the random access message sent by the first user equipment by using the target preamble resource configured on the first time granularity and/or the second time granularity indicated by the second configuration signaling.

In some examples, the second configuration signaling carries a sixth field; the sixth field is filled with a first preset value, which indicates that the target preamble resource includes the first preamble resource; the sixth field is filled with a second preset value or is not configured, which indicates that the target preamble resource includes a first preamble resource and a second preamble resource.

In some examples, the sixth field has a bit width of 1.

In some examples, the PRACH resource includes a first PRACH resource corresponding to the first time granularity and a second PRACH resource corresponding to the second time granularity; the first PRACH resource includes a first RO time-frequency resource, a second RO time-frequency resource, and a first preamble resource corresponding to the first RO time-frequency resource and the second RO time-frequency resource, and the second PRACH resource includes a second RO time-frequency resource and a second preamble resource corresponding to the second RO time-frequency resource;
the receiving module 131 is specifically to receive the random access message sent by the first user equipment by using a target RO time-frequency resource configured on the first time granularity and/or the second time granularity, wherein the target RO time-frequency resource includes a first RO time-frequency resource and a second RO time-frequency resource, or the target RO time-frequency resource includes the first RO time-frequency resource.

In some examples, the above random access apparatus may further include:
an issuing module, to send a second configuration signaling to the first user equipment, wherein the second configuration signaling is to indicate the target RO time-frequency resource;
the receiving module 131, specifically to receive the random access message sent by the first user equipment by using the target RO time-frequency resource configured on the first time granularity and/or the second time granularity indicated by the second configuration signaling.

In some examples, the second configuration signaling carries a seventh field; the seventh field is filled with a first preset value, which indicates that the target RO time-frequency resource includes the first RO time-frequency resource; the seventh field is filled with a second preset value or is not configured, which indicates that the target RO time-frequency resource includes a first RO time-frequency resource and a second RO time-frequency resource.

In some examples, the seventh field has a bit width of 1.

In some examples, the PRACH resource includes a first PRACH resource corresponding to the first time granularity and a second PRACH resource corresponding to the second time granularity; the first PRACH resource includes a first RO time-frequency resource and a first preamble resource corresponding to the first RO time-frequency resource, and the second PRACH resource includes a second RO time-frequency resource and a second preamble resource corresponding to the second RO time-frequency resource;
the configuration module 134 is specifically to: configure the first PRACH resource on the first time granularity and/or the second time granularity by taking a first frequency domain starting point indicated by the first RO time-frequency resource as a starting point; configure the second PRACH resource on the first time granularity and/or the second time granularity by taking a second frequency domain starting point indicated by the second RO time-frequency resource as a starting point.

In some examples, the first RO time-frequency resource carries an eighth field, and the second RO time-frequency resource carries a ninth field; the eighth field is filled with the first frequency domain starting point, and the ninth field is filled with the second frequency domain starting point; or,
the second RO time-frequency resource carries the ninth field, and the first RO time-frequency resource carries a tenth field; the ninth field is filled with the second frequency domain starting point, and the tenth field is filled with an frequency offset of the first frequency domain starting point relative to the second frequency domain starting point.

In some examples, the first RO time-frequency resource and/or the second RO time-frequency resource carries an eleventh field; the eleventh field is to be filled with a reference frequency domain starting point.

In some examples, the PRACH resource includes a first PRACH resource corresponding to the first time granularity and a second PRACH resource corresponding to the second time granularity; the first PRACH resource includes a first RO time-frequency resource and a first preamble resource corresponding to the first RO time-frequency resource, the second PRACH resource includes a second RO time-frequency resource and a second preamble resource corresponding to the second RO time-frequency resource;
the configuration module 134 is specifically to: configure the first PRACH resource on the first time granularity and/or the second time granularity according to a first time domain position corresponding to a format of the first preamble resource indicated by the first RO time-frequency resource; configure the second PRACH resource on the first time granularity and/or the second time granularity according to a second time domain position corresponding to a format of the second preamble resource indicated by the second RO time-frequency resource.

In some examples, a corresponding relationship between an index and a time domain position corresponding to a preamble format has been stored in the first UE; the first RO time-frequency resource carries a twelfth field, and the second RO time-frequency resource carries a thirteenth field, the twelfth field is filled with a first index of the first time domain position; the thirteenth field is filled with a second index of the second time domain position; or,
the first RO time-frequency resource carries a fourteenth field, and the second RO time-frequency resource carries a fifteenth field, wherein the fourteenth field is filled with the first time domain position; the fifteenth field is filled with the second time domain position.

In some examples, the time granularity is a sub-frame, a time slot, or a symbol.

Corresponding to the above random access method, an example of the present disclosure further provides a user equipment, as shown in Figure 15, including a processor 151 and a machine-readable storage medium 152, the machine-readable storage medium 152 stores machine-executable instructions that can be executed by the processor 151, when executed, which causes the processor 151 to:
generate a random access message;
send the random access message to a base station based on a PRACH resource configured on the first time granularity and/or a second time granularity, wherein the second time granularity is a time granularity of uplink transmission data;
wherein the user equipment is capable of identifying the uplink frequency domain sub-band on the first time granularity.

In some examples, the machine-executable instructions further can cause the processor 151 to:
obtain the PRACH resource from the base station before generating a random access message;
configure the PRACH resource on the first time granularity and/or the second time granularity.

In some examples, a first PRACH resource corresponding to the first time granularity and a second PRACH resource corresponding to the second time granularity are configured by the base station, and the PRACH resource includes the first PRACH resource and the second PRACH resource;
the machine-executable instructions can cause the processor 151 specifically to:
configure the first PRACH resource and the second PRACH resource on the first time granularity and the second time granularity.

In some examples, the first PRACH resource includes a first RO time-frequency resource and a first preamble resource corresponding to the first RO time-frequency resource, and the second PRACH resource includes a second RO time-frequency resource and a second RO time-frequency resource and a second preamble resource corresponding to the second RO time-frequency resource;
the machine-executable instructions can cause the processor 151 specifically to:
if the first preamble resource is the same as or partially overlaps with the second preamble resource, and the first RO time-frequency resource is the same as or partially overlaps with the second RO time-frequency resource, then configure the first PRACH resource on the first time granularity, and configure the second PRACH resource on the second time granularity.

In some examples, the first PRACH resource includes a first RO time-frequency resource and a first preamble resource corresponding to the first RO time-frequency resource, and the second PRACH resource includes a second RO time-frequency resource and a second preamble resource corresponding to the second RO time-frequency resource;
the machine-executable instructions can cause the processor 151 specifically to:
if the first preamble resource is the same as or partially overlaps with the second preamble resource, and the first RO time-frequency resource partially overlaps with the second RO time-frequency resource, configure the first PRACH resource on the first time granularity and the second time granularity, configure the second PRACH resource on the first time granularity and/or the second time granularity, and invalidate a third RO time-frequency resource in the first RO time-frequency resource, wherein the third RO time-frequency resource is a portion where the first RO time-frequency resource overlaps with the second RO time-frequency resource.

In some examples, the machine-executable instructions can cause the processor 151 specifically to:
send the random access message to the base station by using a PRACH resource configured on a third target time granularity, wherein the third target time granularity includes the first time granularity and the second time granularity, or, the third target time granularity includes the first time granularity.

In some examples, the PRACH resource includes a first PRACH resource corresponding to the first time granularity and a second PRACH resource corresponding to the second time granularity; the first PRACH resource includes a first RO time-frequency resource and a first preamble resource and a second preamble resource corresponding to the first RO time-frequency resource, the second PRACH resource includes a second RO time-frequency resource and a second preamble resource corresponding to the second RO time-frequency resource;
the machine-executable instructions can cause the processor 151 specifically to:
send a random access message to the base station by using the target preamble resource configured on the first time granularity and/or the second time granularity, wherein the target preamble resource includes a first preamble resource and a second preamble resource, or the target preamble resource includes a first preamble resource.

In some examples, the PRACH resource includes a first PRACH resource corresponding to the first time granularity and a second PRACH resource corresponding to the second time granularity; the first PRACH resource includes a first RO time-frequency resource, a second RO time-frequency resource, and a first preamble resource corresponding to the first RO time-frequency resource and a second RO time-frequency resource, and the second PRACH resource includes a second RO time-frequency resource and a second preamble resource corresponding to the second RO time-frequency resource;
the machine-executable instructions can cause the processor 151 specifically to:
send the random access message to the base station by using a target RO time-frequency resource configured on the first time granularity and/or the second time granularity, wherein the target RO time-frequency resource includes a first RO time-frequency resource and a second RO time-frequency resource, or the target RO time-frequency resource includes the first RO time-frequency resource.

In some examples, the PRACH resource includes a first PRACH resource corresponding to the first time granularity and a second PRACH resource corresponding to the second time granularity; the first PRACH resource includes a first RO time-frequency resource and a first preamble resource corresponding to the first RO time-frequency resource, and the second PRACH resource includes a second RO time-frequency resource and a second preamble resource corresponding to the second RO time-frequency resource;
the machine-executable instructions can cause the processor 151 specifically to: configure the first PRACH resource on the first time granularity and/or the second time granularity by taking a first frequency domain starting point indicated by the first RO time-frequency resource as a starting point; configure the second PRACH resource on the first time granularity and/or the second time granularity by taking a second frequency domain starting point indicated by the second RO time-frequency resource as a starting point.

In some examples, the PRACH resource includes a first PRACH resource corresponding to the first time granularity and a second PRACH resource corresponding to the second time granularity; the first PRACH resource includes a first RO time-frequency resource and a first preamble resource corresponding to the first RO time-frequency resource, the second PRACH resource includes a second RO time-frequency resource and a second preamble resource corresponding to the second RO time-frequency resource;
the machine-executable instructions can cause the processor 151 specifically to: configure the first PRACH resource on the first time granularity and/or the second time granularity according to a first time domain position corresponding to a format of the first preamble resource indicated by the first RO time-frequency resource; configure the second PRACH resource on the first time granularity and/or the second time granularity according to a second time domain position corresponding to a format of the second preamble resource indicated by the second RO time-frequency resource.

Corresponding to the above random access method, an example of the present disclosure further provides a base station, as shown in Figure 16, which includes a processor 161 and a machine-readable storage medium 162, the machine-readable storage medium 162 stores machine-executable instructions that can be executed by the processor 161, when executed, which causes the processor 161 to:
receive a random access message sent by a first user equipment based on a PRACH resource configured on a first time granularity and/or a second time granularity, wherein the first user equipment is capable of identifying an uplink frequency domain sub-band on the first time granularity, the second time granularity is a time granularity of uplink transmission data;
randomly access the first user equipment to the base station based on the random access message.

In some examples, the machine-executable instructions further can cause the processor 161 specifically to:
obtain the PRACH resource before receiving the random access message sent by the first user equipment;
configure the PRACH resource on the first time granularity and/or the second time granularity.

In some examples, a first PRACH resource corresponding to the first time granularity and a second PRACH resource corresponding to the second time granularity are configured by the base station, and the PRACH resources include the first PRACH resource and the second PRACH resource;
the machine-executable instructions can cause the processor 161 specifically to:
configure the first PRACH resource and the second PRACH resource on the first time granularity and the second time granularity.

In some examples, the first PRACH resource includes a first RO time-frequency resource and a first preamble resource corresponding to the first RO time-frequency resource, and the second PRACH resource includes a second RO time-frequency resource and a second preamble resource corresponding to the second RO time-frequency resource;
the machine-executable instructions can cause the processor 161 specifically to:
if the first preamble resource is the same as or partially overlaps with the second preamble resource, and the first RO time-frequency resource is the same as or partially overlaps with the second RO time-frequency resource, then configure the first PRACH resource on the first time granularity, and configure the second PRACH resource on the second time granularity.

In some examples, the first PRACH resource includes a first RO time-frequency resource and a first preamble resource corresponding to the first RO time-frequency resource, and the second PRACH resource includes a second RO time-frequency resource and a second preamble resource corresponding to the second RO time-frequency resource;
the machine-executable instructions can cause the processor 161 specifically to:
if the first preamble resource is the same as or partially overlaps with the second preamble resource, and the first RO time-frequency resource partially overlaps with the second RO time-frequency resource, configure the first PRACH resource on the first time granularity and the second time granularity, configuring the second PRACH resource on the first time granularity and/or the second time granularity, and invalidate a third RO time-frequency resource in the first RO time-frequency resource, wherein the third RO time-frequency resource is a portion where the first RO time-frequency resource overlaps with the second RO time-frequency resource.

In some examples, the machine-executable instructions can cause the processor 161 specifically to:
receive a random access message sent by the first user equipment by using a PRACH resource configured on a third target time granularity, wherein the third target time granularity includes the first time granularity and the second time granularity, or, the third target time granularity includes the first time granularity.

In some examples, the PRACH resource includes a first PRACH resource corresponding to the first time granularity and a second PRACH resource corresponding to the second time granularity; the first PRACH resource includes a first RO time-frequency resource and a first preamble resource and a second preamble resource corresponding to the first RO time-frequency resource, the second PRACH resource includes a second RO time-frequency resource and a second preamble resource corresponding to the second RO time-frequency resource;
the machine-executable instructions can cause the processor 161 specifically to:
receive the random access message sent by the first user equipment by using the target preamble resource configured on the first time granularity and/or the second time granularity, wherein the target preamble resource includes a first preamble resource and a second preamble resource, or the target preamble resource includes a first preamble resource.

In some examples, the PRACH resource includes a first PRACH resource corresponding to the first time granularity and a second PRACH resource corresponding to the second time granularity; the first PRACH resource includes a first RO time-frequency resource, a second RO time-frequency resource, and a first preamble resource corresponding to the first RO time-frequency resource and a second RO time-frequency resource, and the second PRACH resource includes a second RO time-frequency resource and a second preamble resource corresponding to the second RO time-frequency resource;
the machine-executable instructions can cause the processor 161 specifically to:
receive the random access message sent by the first user equipment by using a target RO time-frequency resource configured on the first time granularity and/or the second time granularity, wherein the target RO time-frequency resource includes a first RO time-frequency resource and a second RO time-frequency resource, or the target RO time-frequency resource includes the first RO time-frequency resource.

In some examples, the PRACH resource includes a first PRACH resource corresponding to the first time granularity and a second PRACH resource corresponding to the second time granularity; the first PRACH resource includes a first RO time-frequency resource and a first preamble resource corresponding to the first RO time-frequency resource, and the second PRACH resource includes a second RO time-frequency resource and a second preamble resource corresponding to the second RO time-frequency resource;
the machine-executable instructions can cause the processor 161 specifically to: configure the first PRACH resource on the first time granularity and/or the second time granularity by taking a first frequency domain starting point indicated by the first RO time-frequency resource as a starting point; configure the second PRACH resource on the first time granularity and/or the second time granularity by taking a second frequency domain starting point indicated by the second RO time-frequency resource as a starting point.

In some examples, the PRACH resource includes a first PRACH resource corresponding to the first time granularity and a second PRACH resource corresponding to the second time granularity; the first PRACH resource includes a first RO time-frequency resource and a first preamble resource corresponding to the first RO time-frequency resource, the second PRACH resource includes a second RO time-frequency resource and a second preamble resource corresponding to the second RO time-frequency resource;
the machine-executable instructions can cause the processor 161 specifically to: configure the first PRACH resource on the first time granularity and/or the second time granularity according to a first time domain position corresponding to a format of the first preamble resource indicated by the first RO time-frequency resource; configure the second PRACH resource on the first time granularity and/or the second time granularity according to a second time domain position corresponding to a format of the second preamble resource indicated by the second RO time-frequency resource.

The machine-readable storage medium may include a Random Access Memory (RAM) or a Non-Volatile Memory (NVM), such as at least one disk memory. Optionally, the machine-readable storage medium may further be at least one storage device located remotely from the aforementioned processor.

The processor can be a general-purpose processor, including a Central Processing Unit (CPU), a Network Processor (NP), etc.; it can also be a Digital Signal Processor (DSP), an Application Specific Integrated Circuit (ASIC), a Field-Programmable Gate Array (FPGA) or other programmable logic devices, discrete gate or transistor logic devices, and discrete hardware components.

In yet another example provided by the present disclosure, a computer-readable storage medium is further provided, which stores a computer program thereon, wherein the computer program executed by a processor, carries out any one of the above random access methods applied to a first user equipment.

In yet another example provided by the present disclosure, a computer-readable storage medium is further provided, which stores a computer program thereon, wherein the computer program executed by a processor, carries out any one of the above random access methods applied to a base station.

In yet another example provided by the present disclosure, a computer program product containing instructions is further provided, which when running on a computer, causes the computer to carry out any one of the above random access methods applied to a first user equipment.

In yet another example provided by the present disclosure, a computer program product containing instructions is further provided, which when running on a computer, causes the computer to carry out any one of the above random access methods applied to a base station.

In the above examples, it may be achieved in whole or in part by software, hardware, firmware or any combination thereof. When implemented in software, it can be implemented in whole or in part in the form of a computer program product. The computer program product includes one or more computer instructions. When the computer program instructions are loaded and executed on a computer, the processes or functions described in the examples of the present disclosure are generated in whole or in part. The computer may be a general purpose computer, special purpose computer, computer network, or other programmable device. The computer instructions may be stored in a computer readable storage medium or transmitted from one computer readable storage medium to another computer readable storage medium, for example, the computer instructions may be transmitted from a website, computer, server or data center to another website, computer, server, or data center by wire (such as coaxial cable, fiber optic, digital subscriber line (DSL)) or wirelessly (such as infrared, wireless, microwave, etc.). The computer-readable storage medium may be any usable medium that can be accessed by a computer or a data storage device such as a server and a data center and the like that includes an integration of one or more available media. The usable media may be magnetic media (such as a floppy disk, a hard disk, a magnetic tape), optical media (such as a DVD), or Solid State Disk (SSD) and the like.

It should be noted that, relational terms here such as first and second and the like herein are only used to distinguish one entity or operation from another and do not necessarily require or imply any such actual relationship or order between these entities or operations. Moreover, the terms "comprising", "including" or any other variations thereof are intended to encompass a non-exclusive inclusion such that a process, method, article or device that includes a series of elements includes not only those elements, but also includes other elements not explicitly listed or other elements inherent to such a process, method, article or device. Without further limitation, elements defined by the phrase "comprising one..." do not preclude the presence of additional identical elements in a process, method, article or device that includes the mentioned elements.

The various examples in this specification are described in a related manner. Each example focuses on the differences from other examples, and the same and similar parts between the various examples can be referred to each other. Especially, for the examples of the apparatus, base station, user equipment, storage medium and program product, the description is relatively simple because it is basically similar to the example of the method, and the relevant points can be referred to the partial description of the example of the method.

The above descriptions are only preferred examples of the present disclosure, and are not intended to limit the present disclosure. Any modifications, equivalent replacements, improvements and the like made within the spirit and principles of the present disclosure shall be included within the scope of protection of the present disclosure.

## Claims

1. A random access method, applied to a first user equipment, wherein the first user equipment is capable of identifying an uplink frequency domain sub-band on a first time granularity, wherein the method comprises:
generating a random access message;
sending the random access message to a base station based on a physical random access channel PRACH resource configured on the first time granularity and/or a second time granularity, wherein the second time granularity is a time granularity of uplink transmission data.

2. The method according to claim 1, wherein, before generating the random access message, the method further comprises:
obtaining the PRACH resource from the base station;
configuring the PRACH resource on the first time granularity and/or the second time granularity.

3. The method according to claim 2, wherein a first PRACH resource corresponding to the first time granularity is not configured by the base station, and a second PRACH resource corresponding to the second time granularity is configured by the base station, the PRACH resource comprises the second PRACH resource;
wherein configuring the PRACH resource on the first time granularity and/or the second time granularity comprises:
configuring the second PRACH resource on a first target time granularity, the first target time granularity comprises the first time granularity and the second time granularity, or the first target time granularity comprises the second time granularity.

4. The method according to claim 3, further comprising:
receiving a first configuration signaling sent by the base station, wherein the first configuration signaling is to indicate the first target time granularity;
wherein configuring the second PRACH resource on the first target time granularity comprises:
configuring the second PRACH resource on the first target time granularity indicated by the first configuration signaling.

5. The method according to claim 2, wherein a first PRACH resource corresponding to the first time granularity and a second PRACH resource corresponding to the second time granularity are configured by the base station, and the PRACH resource comprises the first PRACH resource and the second PRACH resource;
wherein configuring the PRACH resource on the first time granularity and/or the second time granularity comprises:
configuring the first PRACH resource and the second PRACH resource on the first time granularity and the second time granularity.

6. The method according to claim 5, wherein configuring the first PRACH resource and the second PRACH resource on the first time granularity and the second time granularity comprises:
configuring the first PRACH resource on a second target time granularity, wherein the second target time granularity comprises the first time granularity and the second time granularity, or the second target time granularity comprises the first time granularity;
configuring the second PRACH resource on a first target time granularity, wherein the first target time granularity comprises the first time granularity and the second time granularity, or the first target time granularity comprises the second time granularity.

7. The method according to claim 6, further comprising:
receiving a first configuration signaling sent by the base station, wherein the first configuration signaling is to indicate the first target time granularity;
wherein configuring the second PRACH resource on the first target time granularity comprises:
configuring the second PRACH resource on the first target time granularity indicated by the first configuration signaling.

8. The method according to claim 4 or 7, wherein the first configuration signaling carries a first field; the first field is filled with a first preset value, which indicates that the first target time granularity comprises the first time granularity and the second time granularity; the first field is filled with a second preset value or is not configured, which indicates that the first target time granularity comprises the second time granularity.

9. The method according to claim 8, wherein a bit width of the first field is 1.

10. The method according to claim 6 or 7, further comprising:
receiving a first configuration signaling sent by the base station, wherein the first configuration signaling is to indicate the second target time granularity;
wherein configuring the first PRACH resource on the second target time granularity comprises:
configuring the second PRACH resource on the second target time granularity indicated by the first configuration signaling.

11. The method according to claim 10, wherein the first configuration signaling carries a second field; the second field is filled with a first preset value, which indicates that the second target time granularity comprises the first time granularity and the second time granularity; the second field is filled with a second preset value or is not configured, which indicates that the second target time granularity comprises the first time granularity.

12. The method according to claim 11, wherein a bit width of the second field is 1.

13. The method according to claim 5, wherein the first PRACH resource comprises a first random access channel occasion RO time-frequency resource and a first preamble resource corresponding to the first RO time-frequency resource, the second PRACH resource comprises a second RO time-frequency resource and a second preamble resource corresponding to the second RO time-frequency resource;
if the first preamble resource is the same as or partially overlaps with the second preamble resource, and the first RO time-frequency resource is the same as or partially overlaps with the second RO time-frequency resource, configuring the first PRACH resource and the second PRACH resource on the first time granularity and the second time granularity comprises:
configuring the first PRACH resource on the first time granularity, and configuring the second PRACH resource on the second time granularity.

14. The method according to claim 5, wherein the first PRACH resource comprises a first RO time-frequency resource and a first preamble resource corresponding to the first RO time-frequency resource, and the second PRACH resource comprises a second RO time-frequency resource and a second preamble resource corresponding to the second RO time-frequency resource;
if the first preamble resource is the same as or partially overlaps with the second preamble resource, and the first RO time-frequency resource partially overlaps with the second RO time-frequency resource, configuring the first PRACH resource and the second PRACH resource on the first time granularity and the second time granularity comprises:
configuring the first PRACH resource on the first time granularity and the second time granularity, configuring the second PRACH resource on the first time granularity and/or the second time granularity, and invalidating a third RO time-frequency resource in the first RO time-frequency resource, wherein the third RO time-frequency resource is a portion where the first RO time-frequency resource overlaps with the second RO time-frequency resource.

15. The method according to claim 5, wherein the first PRACH resource comprises a first RO time-frequency resource, a first preamble resource and a second preamble resource corresponding to the first RO time-frequency resource, the second PRACH resource comprises a second RO time-frequency resource and the second preamble resource corresponding to the second RO time-frequency resource;
wherein configuring the first PRACH resource and the second PRACH resource on the first time granularity and the second time granularity comprises:
configuring the first preamble resource and the second preamble resource on the first time granularity and the second time granularity; or
configuring the first preamble resource on the first time granularity and the second time granularity, and configuring the second preamble resource on the second time granularity; or
configuring the first preamble resource on the first time granularity, and configuring the second preamble resource on the first time granularity and the second time granularity; or
configuring the first preamble resource on the first time granularity, and configuring the second preamble resource and the first preamble resource on the second time granularity.

16. The method according to claim 5, wherein the first PRACH resource comprises a first RO time-frequency resource, a second RO time-frequency resource, and a first preamble resource corresponding to the first RO time-frequency resource and the second RO time-frequency resource, wherein the second PRACH resource comprises the second RO time-frequency resource and a second preamble resource corresponding to the second RO time-frequency resource;
wherein configuring the first PRACH resource and the second PRACH resource on the first time granularity and the second time granularity comprises:
configuring the first RO time-frequency resource and the second RO time-frequency resource on the first time granularity and the second time granularity; or
configuring the first RO time-frequency resource on the first time granularity and the second time granularity, and configuring the second RO time-frequency resource on the second time granularity; or
configuring the first RO time-frequency resource on the first time granularity, and configuring the second RO time-frequency resource on the first time granularity and the second time granularity; or
configuring the first RO time-frequency resource on the first time granularity, and configuring the second RO time-frequency resource and the first preamble resource on the second time granularity.

17. The method according to claim 2, wherein the PRACH resource comprises a first PRACH resource corresponding to the first time granularity and a second PRACH resource corresponding to the second time granularity;
wherein obtaining the PRACH resource from the base station comprises:
obtaining the first PRACH resource and the second PRACH resource from the base station, wherein the first PRACH resource comprises a first RO time-frequency resource, and the second PRACH resource comprises a second RO time-frequency resource and a second preamble resource corresponding to the second RO time-frequency resource;
taking the second preamble resource as the first preamble resource corresponding to the first RO time-frequency resource, and adding the same to the first PRACH resource.

18. The method according to claim 1, wherein sending the random access message to the base station based on the PRACH resource configured on the first time granularity and/or the second time granularity comprises:
sending the random access message to the base station by using the PRACH resource configured on a third target time granularity, wherein the third target time granularity comprises the first time granularity and the second time granularity, or, the third target time granularity comprises the first time granularity.

19. The method according to claim 18, further comprising:
receiving a second configuration signaling sent by the base station, wherein the second configuration signaling is to indicate the third target time granularity;
wherein sending the random access message to the base station by using the PRACH resource configured on the third target time granularity comprises:
sending the random access message to the base station by using the PRACH resource configured on the third target time granularity indicated by the second configuration signaling.

20. The method according to claim 19, wherein the second configuration signaling carries a third field; the third field is filled with a first preset value, which indicates that the third target time granularity comprises the first time granularity; the third field is filled with a second preset value or is not configured, which indicates that the third target time granularity comprises the first time granularity and the second time granularity.

21. The method according to claim 20, wherein a bit width of the third field is 1.

22. The method according to claim 18, wherein sending the random access message to the base station by using the PRACH resource configured on the third target time granularity comprises:
sending the random access message to the base station by using a first target PRACH resource and/or a second target PRACH resource configured on the third target time granularity, wherein the first target PRACH resource is an available PRACH resource on the first time granularity, and the second target PRACH resource is an available PRACH resource on the second time granularity.

23. The method according to claim 22, further comprising:
receiving a second configuration signaling sent by the base station, wherein the second configuration signaling is to indicate a target PRACH resource, and the target PRACH resource comprises the first target PRACH resource and/or the second target PRACH resource;
wherein sending the random access message to the base station by using the first target PRACH resource and/or the second target PRACH resource configured on the third target time granularity comprises:
sending the random access message to the base station by using the target PRACH resource configured on the third target time granularity indicated by the second configuration signaling.

24. The method according to claim 23, wherein the second configuration signaling carries a fourth field and/or a fifth field;
the fourth field is filled with a third preset value, which indicates that the second target PRACH resource comprises a first PRACH resource corresponding to the first time granularity; the fourth field is filled with a fourth preset value, which indicates that the second target PRACH resource comprises a second PRACH resource corresponding to the second time granularity; the fourth field is filled with a fifth preset value, which indicates that the second target PRACH resource comprises the first PRACH resource and the second PRACH resource;
the fifth field is filled with the third preset value, which indicates that the first target PRACH resource comprises the first PRACH resource; the fifth field is filled with the fourth preset value, which indicates that the first target PRACH resource comprises the second PRACH resource; the fifth field is filled with the fifth preset value, which indicates that the first target PRACH resource comprises the first PRACH resource and the second PRACH resource.

25. The method according to claim 24, wherein bit widths of the fourth field and the fifth field are 2 respectively.

26. The method according to claim 1, wherein the PRACH resource comprises a first PRACH resource corresponding to the first time granularity and a second PRACH resource corresponding to the second time granularity; the first PRACH resource comprises a first RO time-frequency resource, a first preamble resource and a second preamble resource corresponding to the first RO time-frequency resource, and the second PRACH resource comprises a second RO time-frequency resource and the second preamble resource corresponding to the second RO time-frequency resource;
wherein sending the random access message to the base station based on the PRACH resource configured on the first time granularity and/or the second time granularity comprises:
sending the random access message to the base station by using a target preamble resource configured on the first time granularity and/or the second time granularity, wherein the target preamble resource comprises the first preamble resource and the second preamble resource, or the target preamble resource comprises the first preamble resource.

27. The method according to claim 26, further comprising:
receive a second configuration signaling sent by the base station, wherein the second configuration signaling is to indicate the target preamble resource;
wherein sending the random access message to the base station by using the target preamble resource configured on the first time granularity and/or the second time granularity comprises:
sending the random access message to the base station by using the target preamble resource configured on the first time granularity and/or the second time granularity indicated by the second configuration signaling.

28. The method according to claim 27, wherein the second configuration signaling carries a sixth field; the sixth field is filled with a first preset value, which indicates that the target preamble resource comprises the first preamble resource; the sixth field is filled with a second preset value or is not configured, which indicates that the target preamble resource comprises the first preamble resource and the second preamble resource.

29. The method according to claim 28, wherein a bit width of the sixth field is 1.

30. The method according to claim 1, wherein the PRACH resource comprises a first PRACH resource corresponding to the first time granularity and a second PRACH resource corresponding to the second time granularity; the first PRACH resource comprises a first RO time-frequency resource, a second RO time-frequency resource and a first preamble resource corresponding to the first RO time-frequency resource and the second RO time-frequency resource, and the second PRACH resource comprises the second RO time-frequency resource and a second preamble resource corresponding to the second RO time-frequency resource;
wherein sending the random access message to the base station based on the PRACH resource configured on the first time granularity and/or the second time granularity comprises:
sending the random access message to the base station by using a target RO time-frequency resource configured on the first time granularity and/or the second time granularity, wherein the target RO time-frequency resource comprises the first RO time-frequency resource and the second RO time-frequency resource, or the target RO time-frequency resource comprises the first RO time-frequency resource.

31. The method according to claim 30, further comprising:
receiving a second configuration signaling sent by the base station, wherein the second configuration signaling is to indicate the target RO time-frequency resource;
wherein sending the random access message to the base station by using the target RO time-frequency resource configured on the first time granularity and/or the second time granularity comprises:
sending the random access message to the base station by using the target RO time-frequency resource indicated by the second configuration signaling configured on the first time granularity and/or the second time granularity.

32. The method according to claim 31, wherein the second configuration signaling carries a seventh field; the seventh field is filled with a first preset value, which indicates that the target RO time-frequency resource comprises the first RO time-frequency resource; the seventh field is filled with a second preset value or is not configured, which indicates that the target RO time-frequency resource comprises the first RO time-frequency resource and the second RO time-frequency resource.

33. The method according to claim 32, wherein a bit width of the seventh field is 1.

34. The method according to claim 2, wherein the PRACH resource comprises a first PRACH resource corresponding to the first time granularity and a second PRACH resource corresponding to the second time granularity; the first PRACH resource comprises a first RO time-frequency resource and a first preamble resource corresponding to the first RO time-frequency resource, and the second PRACH resource comprises a second RO time-frequency resource and a second preamble resource corresponding to the second RO time-frequency resource;
wherein configuring the PRACH resource on the first time granularity and/or the second time granularity comprises:
configuring the first PRACH resource on the first time granularity and/or the second time granularity by taking a first frequency domain starting point indicated by the first RO time-frequency resource as a starting point;
configuring the second PRACH resource on the first time granularity and/or the second time granularity by taking a second frequency domain starting point indicated by the second RO time-frequency resource as a starting point.

35. The method according to claim 34, wherein the first RO time-frequency resource carries an eighth field, the second RO time-frequency resource carries a ninth field; the eighth field is filled with the first frequency domain starting point, the ninth field is filled with the second frequency domain starting point; or,
the second RO time-frequency resource carries the ninth field, and the first RO time-frequency resource carries a tenth field; the ninth field is filled with the second frequency domain starting point, and the tenth field is filled with a frequency offset of the first frequency domain starting point relative to the second frequency domain starting point.

36. The method according to claim 35, wherein the first RO time-frequency resource and/or the second RO time-frequency resource carry an eleventh field; the eleventh field is to be filled with a reference frequency domain starting point.

37. The method according to claim 2, wherein the PRACH resource comprises a first PRACH resource corresponding to the first time granularity and a second PRACH resource corresponding to the second time granularity; the first PRACH resource comprises a first RO time-frequency resource and a first preamble resource corresponding to the first RO time-frequency resource, and the second PRACH resource comprises a second RO time-frequency resource and a second preamble resource corresponding to the second RO time-frequency resource;
wherein configuring the PRACH resource on the first time granularity and/or the second time granularity comprises:
configuring the first PRACH resource on the first time granularity and/or the second time granularity according to a first time domain position corresponding to a format of the first preamble resource indicated by the first RO time-frequency resource;
configuring the second PRACH resource on the first time granularity and/or the second time granularity according to a second time domain position corresponding to a format of the second preamble resource indicated by the second RO time-frequency resource.

38. The method according to claim 37, wherein the first UE has stored a corresponding relationship between an index and a time domain position corresponding to a preamble format; the first RO time-frequency resource carries a twelfth field, the second RO time-frequency resource carries a thirteenth field, the twelfth field is filled with a first index of the first time domain position; the thirteenth field is filled with a second index of the second time domain position; or,
the first RO time-frequency resource carries a fourteenth field, the second RO time-frequency resource carries a fifteenth field, and the fourteenth field is filled with the first time domain position; the fifteenth field is filled with the second time domain position.

39. The method according to any one of claims 1-7 and 13-38, wherein the time granularity is a sub-frame, a time slot or a symbol.

40. A random access method, applied to a base station, wherein the method comprises:
receiving a random access message sent by a first user equipment based on a physical random access channel PRACH resource configured on a first time granularity and/or a second time granularity, wherein the first user equipment is capable of identifying an uplink frequency domain sub-band on the first time granularity, and the second time granularity is a time granularity of uplink transmission data;
randomly accessing the first user equipment to the base station based on the random access message.

41. The method according to claim 40, wherein before receiving the random access message sent by the first user equipment, the method further comprises:
obtaining the PRACH resource;
configuring the PRACH resource on the first time granularity and/or the second time granularity.

42. The method according to claim 41, wherein a first PRACH resource corresponding to the first time granularity is not configured by the base station, and a second PRACH resource corresponding to the second time granularity is configured by the base station, the PRACH resource comprises the second PRACH resource;
wherein configuring the PRACH resource on the first time granularity and/or the second time granularity comprises:
configuring the second PRACH resource on a first target time granularity, the first target time granularity comprises the first time granularity and the second time granularity, or the first target time granularity comprises the second time granularity.

43. The method according to claim 42, further comprising:
sending a first configuration signaling to the first user equipment, wherein the first configuration signaling is to indicate the first target time granularity;
wherein configuring the second PRACH resource on the first target time granularity comprises:
configuring the second PRACH resource on the first target time granularity indicated by the first configuration signaling.

44. The method according to claim 41, wherein a first PRACH resource corresponding to the first time granularity and a second PRACH resource corresponding to the second time granularity are configured by the base station, and the PRACH resource comprises the first PRACH resource and the second PRACH resource;
wherein configuring the PRACH resource on the first time granularity and/or the second time granularity comprises:
configuring the first PRACH resource and the second PRACH resource on the first time granularity and the second time granularity.

45. The method according to claim 44, wherein configuring the first PRACH resource and the second PRACH resource on the first time granularity and the second time granularity comprises:
configuring the first PRACH resource on a second target time granularity, the second target time granularity comprises the first time granularity and the second time granularity, or the second target time granularity comprises the First time granularity;
configuring the second PRACH resource on a first target time granularity, the first target time granularity comprises the first time granularity and the second time granularity, or the first target time granularity comprises the second time granularity.

46. The method according to claim 45, further comprising:
sending a first configuration signaling to the first user equipment, wherein the first configuration signaling is to indicate the first target time granularity;
wherein configuring the second PRACH resource on the first target time granularity comprises:
configuring the second PRACH resource on the first target time granularity indicated by the first configuration signaling.

47. The method according to claim 43 or 46, wherein the first configuration signaling carries a first field; the first field is filled with a first preset value, which indicates that the first target time granularity comprises the first time granularity and the second time granularity; the first field is filled with a second preset value or is not configured, which indicates that the first target time granularity comprises the second time granularity.

48. The method according to claim 47, wherein a bit width of the first field is 1.

49. The method according to claim 45 or 46, further comprising:
sending a first configuration signaling to the first user equipment, wherein the first configuration signaling is to indicate the second target time granularity;
wherein configuring the first PRACH resource on the second target time granularity comprises:
configuring the second PRACH resource on the second target time granularity indicated by the first configuration signaling.

50. The method according to claim 49, wherein the first configuration signaling carries a second field; the second field is filled with a first preset value, which indicates that the second target time granularity comprises the first time granularity and the second time granularity; the second field is filled with a second preset value or is not configured, which indicates that the second target time granularity comprises the first time granularity.

51. The method according to claim 50, wherein a bit width of the second field is 1.

52. The method according to claim 44, wherein the first PRACH resource comprises a first random access channel occasion RO time-frequency resource and a first preamble resource corresponding to the first RO time-frequency resource, the second PRACH resource comprises a second RO time-frequency resource and a second preamble resource corresponding to the second RO time-frequency resource;
if the first preamble resource is the same as or partially overlaps with the second preamble resource, and the first RO time-frequency resource is the same as or partially overlaps with the second RO time-frequency resource, configuring the first PRACH resource and the second PRACH resource on the first time granularity and the second time granularity comprises:
configuring the first PRACH resource on the first time granularity, and configuring the second PRACH resource on the second time granularity.

53. The method according to claim 44, wherein the first PRACH resource comprises a first RO time-frequency resource and a first preamble resource corresponding to the first RO time-frequency resource, and the second PRACH resource comprises a second RO time-frequency resource and a second preamble resource corresponding to the second RO time-frequency resource;
if the first preamble resource is the same as or partially overlaps with the second preamble resource, and the first RO time-frequency resource partially overlaps with the second RO time-frequency resource, configuring the first PRACH resource and the second PRACH resource on the first time granularity and the second time granularity comprises:
configuring the first PRACH resource on the first time granularity and the second time granularity, configuring the second PRACH resource on the first time granularity and/or the second time granularity, and invalidating a third RO time-frequency resource in the first RO time-frequency resource, wherein the third RO time-frequency resource is a portion where the first RO time-frequency resource overlaps with the second RO time-frequency resource.

54. The method according to claim 44, wherein the first PRACH resource comprises a first RO time-frequency resource, a first preamble resource and a second preamble resource corresponding to the first RO time-frequency resource, the second PRACH resource comprises a second RO time-frequency resource and the second preamble resource corresponding to the second RO time-frequency resource;
wherein configuring the first PRACH resource and the second PRACH resource on the first time granularity and the second time granularity comprises:
configuring the first preamble resource and the second preamble resource on the first time granularity and the second time granularity; or
configuring the first preamble resource on the first time granularity and the second time granularity, and configuring the second preamble resource on the second time granularity; or
configuring the first preamble resource on the first time granularity, and configuring the second preamble resource on the first time granularity and the second time granularity; or
configuring the first preamble resource on the first time granularity, and configuring the second preamble resource and the first preamble resource on the second time granularity.

55. The method according to claim 44, wherein the first PRACH resource comprises a first RO time-frequency resource, a second RO time-frequency resource, and a first preamble resource corresponding to the first RO time-frequency resource and the second RO time-frequency resource, wherein the second PRACH resource comprises the second RO time-frequency resource and a second preamble resource corresponding to the second RO time-frequency resource;
wherein configuring the first PRACH resource and the second PRACH resource on the first time granularity and the second time granularity comprises:
configuring the first RO time-frequency resource and the second RO time-frequency resource on the first time granularity and the second time granularity; or
configuring the first RO time-frequency resource on the first time granularity and the second time granularity, and configuring the second RO time-frequency resource on the second time granularity; or
configuring the first RO time-frequency resource on the first time granularity, and configuring the second RO time-frequency resource on the first time granularity and the second time granularity; or
configuring the first RO time-frequency resource on the first time granularity, and configuring the second RO time-frequency resource and the first preamble resource at the second time granularity.

56. The method according to claim 41, wherein the PRACH resource comprises a first PRACH resource corresponding to the first time granularity and a second PRACH resource corresponding to the second time granularity;
obtaining the PRACH resource comprises:
obtaining the first PRACH resource and the second PRACH resource, wherein the first PRACH resource comprises a first RO time-frequency resource, and the second PRACH resource comprises a second RO time-frequency resource and a second preamble resource corresponding to the second RO time-frequency resource;
taking the second preamble resource as the first preamble resource, and adding the same to the first PRACH resource.

57. The method according to claim 40, wherein receiving the random access message sent by the first user equipment based on the PRACH resource configured on the first time granularity and/or the second time granularity comprises:
receiving the random access message sent by the first user equipment by using a PRACH resource configured on a third target time granularity, wherein the third target time granularity comprises the first time granularity and the second time granularity, or, the third target time granularity comprises the first time granularity.

58. The method according to claim 57, further comprising:
sending a second configuration signaling to the first user equipment, wherein the second configuration signaling is to indicate the third target time granularity;
wherein receiving the random access message sent by the first user equipment by using the PRACH resource configured on the third target time granularity comprises:
receiving the random access message sent by the first user equipment by using the PRACH resource configured on the third target time granularity indicated by the second configuration signaling.

59. The method according to claim 58, wherein the second configuration signaling carries a third field; the third field is filled with a first preset value, which indicates that the third target time granularity comprises the first time granularity; the third field is filled with a second preset value or is not configured, which indicates that the third target time granularity comprises the first time granularity and the second time granularity.

60. The method according to claim 59, wherein a bit width of the third field is 1.

61. The method according to claim 57, wherein receiving the random access message sent by the first user equipment by using the PRACH resource configured on the third target time granularity comprises:
receiving the random access message sent by the first user equipment by using a first target PRACH resource and/or a second target PRACH resource configured on the third target time granularity, wherein the first target PRACH resource is an available PRACH resource on the first time granularity, and the second target PRACH resource is an available PRACH resource on the second time granularity.

62. The method according to claim 61, further comprising:
sending a second configuration signaling to the first user equipment, wherein the second configuration signaling is to indicate a target PRACH resource, and the target PRACH resource comprises the first target PRACH resource and/or the second target PRACH resource;
wherein receiving the random access message sent by the first user equipment by using the first target PRACH resource and/or the second target PRACH resource configured on the third target time granularity comprises:
receiving the random access message sent by the first user equipment by using the target PRACH resource configured on the third target time granularity indicated by the second configuration signaling.

63. The method according to claim 62, wherein the second configuration signaling carries a fourth field and/or a fifth field;
the fourth field is filled with a third preset value, which indicates that the second target PRACH resource comprises a first PRACH resource corresponding to the first time granularity; the fourth field is filled with a fourth preset value, which indicates that the second target PRACH resource comprises a second PRACH resource corresponding to the second time granularity; the fourth field is filled with a fifth preset value, which indicates that the second target PRACH resource comprises the first PRACH resource and the second PRACH resource;
the fifth field is filled with the third preset value, which indicates that the first target PRACH resource comprises the first PRACH resource; the fifth field is filled with the fourth preset value, which indicates that the first target PRACH resource comprises the second PRACH resource; the fifth field is filled with the fifth preset value, which indicates that the first target PRACH resource comprises the first PRACH resource and the second PRACH resource.

64. The method according to claim 63, wherein bit widths of the fourth field and the fifth field are 2 respectively.

65. The method according to claim 40, wherein the PRACH resource comprises a first PRACH resource corresponding to the first time granularity and a second PRACH resource corresponding to the second time granularity; the first PRACH resource comprises a first RO time-frequency resource, a first preamble resource and a second preamble resource corresponding to the first RO time-frequency resource, and the second PRACH resource comprises a second RO time-frequency resource and the second preamble resource corresponding to the second RO time-frequency resource;
wherein receiving the random access message sent by the first user equipment based on the PRACH resource configured on the first time granularity and/or the second time granularity comprises:
receiving the random access message sent by the first user equipment by using a target preamble resource configured on the first time granularity and/or the second time granularity, wherein the target preamble resource comprises the first preamble resource and a second preamble resource, or the target preamble resource comprises the first preamble resource.

66. The method according to claim 65, further comprising:
sending a second configuration signaling to the first user equipment, wherein the second configuration signaling is to indicate the target preamble resource;
wherein receiving the random access message sent by the first user equipment by using the target preamble resource configured on the first time granularity and/or the second time granularity comprises:
receiving the random access message sent by the first user equipment by using the target preamble resource configured on the first time granularity and/or the second time granularity indicated by the second configuration signaling.

67. The method according to claim 66, wherein the second configuration signaling carries a sixth field; the sixth field is filled with a first preset value, which indicates that the target preamble resource comprises the first preamble resource; the sixth field is filled with a second preset value or is not configured, which indicates that the target preamble resource comprises the first preamble resource and the second preamble resource.

68. The method according to claim 67, wherein a bit width of the sixth field is 1.

69. The method according to claim 40, wherein the PRACH resource comprises a first PRACH resource corresponding to the first time granularity and a second PRACH resource corresponding to the second time granularity; the first PRACH resource comprises a first RO time-frequency resource, a second RO time-frequency resource and a first preamble resource corresponding to the first RO time-frequency resource and the second RO time-frequency resource, and the second PRACH resource comprises the second RO time-frequency resource and a second preamble resource corresponding to the second RO time-frequency resource;
wherein receiving the random access message sent by the first user equipment based on the PRACH resource configured on the first time granularity and/or the second time granularity comprises:
receiving the random access message sent by the first user equipment by using a target RO time-frequency resource configured on the first time granularity and/or the second time granularity, wherein the target RO time-frequency resource comprises the first RO time-frequency resource and the second RO time-frequency resource, or the target RO time-frequency resource comprises the first RO time-frequency resource.

70. The method according to claim 69, further comprising:
sending a second configuration signaling to the first user equipment, wherein the second configuration signaling is to indicate the target RO time-frequency resource;
wherein receiving the random access message sent by the first user equipment by using the target RO time-frequency resource configured on the first time granularity and/or the second time granularity comprises:
receiving the random access message sent by the first user equipment by using the target RO time-frequency resource configured on the first time granularity and/or the second time granularity indicated by the second configuration signaling.

71. The method according to claim 70, the second configuration signaling carries a seventh field; the seventh field is filled with a first preset value, which indicates that the target RO time-frequency resource comprises the first RO time-frequency resource; the seventh field is filled with a second preset value or is not configured, which indicates that the target RO time-frequency resource comprises the first RO time-frequency resource and the second RO time-frequency resource.

72. The method according to claim 71, wherein a bit width of the seventh field is 1.

73. The method according to claim 41, wherein the PRACH resource comprises a first PRACH resource corresponding to the first time granularity and a second PRACH resource corresponding to the second time granularity; the first PRACH resource comprises a first RO time-frequency resource and a first preamble resource corresponding to the first RO time-frequency resource, and the second PRACH resource comprises a second RO time-frequency resource and a second preamble resource corresponding to the second RO time-frequency resource;
wherein configuring the PRACH resource on the first time granularity and/or the second time granularity comprises:
configuring the first PRACH resource on the first time granularity and/or the second time granularity by taking a first frequency domain starting point indicated by the first RO time-frequency resource as a starting point;
configuring the second PRACH resource on the first time granularity and/or the second time granularity by taking a second frequency domain starting point indicated by the second RO time-frequency resource as a starting point.

74. The method according to claim 73, wherein the first RO time-frequency resource carries an eighth field, the second RO time-frequency resource carries a ninth field; the eighth field is filled with the first frequency domain starting point, the ninth field is filled with the second frequency domain starting point; or,
the second RO time-frequency resource carries the ninth field, and the first RO time-frequency resource carries a tenth field; the ninth field is filled with the second frequency domain starting point, and the tenth field is filled with a frequency offset of the first frequency domain starting point relative to the second frequency domain starting point.

75. The method according to claim 74, wherein the first RO time-frequency resource and/or the second RO time-frequency resource carry an eleventh field; the eleventh field is to be filled with a reference frequency domain starting point.

76. The method according to claim 41, wherein the PRACH resource comprises a first PRACH resource corresponding to the first time granularity and a second PRACH resource corresponding to the second time granularity; the first PRACH resource comprises a first RO time-frequency resource and a first preamble resource corresponding to the first RO time-frequency resource, and the second PRACH resource comprises a second RO time-frequency resource and a second preamble resource corresponding to the second RO time-frequency resource;
wherein configuring the PRACH resource on the first time granularity and/or the second time granularity comprises:
configuring the first PRACH resource on the first time granularity and/or the second time granularity according to a first time domain position corresponding to a format of the first preamble resource indicated by the first RO time-frequency resource;
configuring the second PRACH resource on the first time granularity and/or the second time granularity according to a second time domain position corresponding to a format of the second preamble resource indicated by the second RO time-frequency resource.

77. The method according to claim 76, wherein the first UE has stored a corresponding relationship between an index and a time domain position corresponding to a preamble format; the first RO time-frequency resource carries a twelfth field, the second RO time-frequency resource carries a thirteenth field, the twelfth field is filled with a first index of the first time domain position; the thirteenth field is filled with a second index of the second time domain position; or,
the first RO time-frequency resource carries a fourteenth field, the second RO time-frequency resource carries a fifteenth field, and the fourteenth field is filled with the first time domain position; the fifteenth field is filled with the second time domain position.

78. The method according to any one of claims 40-46 and 52-77, wherein the time granularity is a sub-frame, a time slot or a symbol.

79. A random access apparatus, applied to a first user equipment, wherein the first user equipment is capable of identifying an uplink frequency domain sub-band on a first time granularity, wherein the apparatus comprises:
a generation module, to generate a random access message;
a sending module, to send the random access message to a base station based on a physical random access channel PRACH resource configured on the first time granularity and/or a second time granularity, wherein the second time granularity is a time granularity of uplink transmission data.

80. A random access apparatus, applied to a base station, wherein the apparatus comprises:
a receiving module, to receive a random access message sent by a first user equipment based on a physical random access channel PRACH resource configured on a first time granularity and/or a second time granularity, wherein the first user equipment is capable of identifying an uplink frequency domain sub-band on the first time granularity, and the second time granularity is a time granularity of uplink transmission data;
an access module, to randomly access the first user equipment to the base station based on the random access message.

81. A user equipment comprising a processor and a machine-readable storage medium, wherein the machine-readable storage medium stores machine-executable instructions that can be executed by the processor, when executed, which causes the processor to carry out the method of any one of claims 1 to 39.

82. A base station comprising a processor and a machine-readable storage medium, wherein the machine-readable storage medium stores machine-executable instructions that can be executed by the processor, when executed, which causes the processor to carry out the method of any one of claims 40 to 78.
